(19) Europäisches Patentamt
European Patent Office
Office européen des brevets

(11) Veröffentlichungsnummer: **0 141 920**
**B1**

(12) # EUROPÄISCHE PATENTSCHRIFT

(45) Veröffentlichungstag der Patentschrift: **24.06.87**

(51) Int. Cl.⁴: **G 03 C 5/54**, C 09 B 29/00

(21) Anmeldenummer: **84109292.7**

(22) Anmeldetag: **06.08.84**

(54) **Farbfotografisches Aufzeichnungsmaterial mit Farbabspaltern, die mit Metallionen chelatisierbare 6-Arylazo-2-amino-3-pyridinolfarbstoffe freisetzen, und ein Farbbild mit einer bildmässigen Verteilung von Nickelkomplexen der Farbstoffe.**

(30) Priorität: **18.08.83 DE 3329774**
**12.10.83 DE 3337118**

(43) Veröffentlichungstag der Anmeldung: **22.05.85 Patentblatt 85/21**

(45) Bekanntmachung des Hinweises auf die Patenterteilung: **24.06.87 Patentblatt 87/26**

(84) Benannte Vertragsstaaten: **BE CH DE FR GB LI**

(56) Entgegenhaltungen:
**EP-A-0 045 633**
**EP-A-0 131 733**
**DE-A-2 740 719**
**US-A-4 204 870**
**US-A-4 346 161**

(73) Patentinhaber: **Agfa-Gevaert AG, Patentabteilung, D-5090 Leverkusen 1 (DE)**

(72) Erfinder: **Bergthaller, Peter, Dr., Leuchter Gemark 5a, D-5060 Bergisch Gladbach 2 (DE)**
Erfinder: **Wolfrum, Gerhard, Dr., Domblick 17, D-5090 Leverkusen 3 (DE)**
Erfinder: **Heidenreich, Holger, Dr., Andreas-Gryphius-Strasse 22, D-5000 Köln 80 (DE)**

EP 0 141 920 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger mit Metallionen komplexierbarer 6-Arylazo-2-amino-3--pyridinolfarbstoff freigesetzt wird.

Das Farbdiffusionsübertragungsverfahren beruht darauf, dass bei der Entwicklung in einem lichtempfindlichen Element nach Massgabe einer vorangegangenen Belichtung eine bildmässige Verteilung diffusionsfähiger Farbstoffe erzeugt und auf ein Bildempfangselement übertragen wird. In einigen Fällen lässt sich die Lichtechtheit der nach einem solchen Verfahren erzeugten Farbbilder in bekannter Weise dadurch verbessern, dass durch Metallionen komplexierbare Farbstoffe verwendet werden, z.B. Farbstoffe die durch nachträglich Behandlung mit geeigneten Metallionen stabile Farbstoff-Metall-Tridentatkomplexe bilden. Die Verbesserung der Lichtechtheit von Azofarbstoffbildern, die nach dem Farbdiffusionsübertragungsverfahren oder nach einem anderen fotografischen Verfahren, etwa nach dem Silberfarbbleichverfahren erhalten worden sind, durch Komplexierung mit Metallionen ist beispielsweise bekannt aus DE-B-1 116 532 oder DE--B-1 125 279.

6-Arylazo-3-pyridinol-Farbstoffe, die aus Farbabspaltern freigesetzt werden können und mit Metallionen farbige Komplexe bilden, sind bekannt aus US-A-4 142 891, US-A-4 195 994 und US-A-4 142 292. Die bekannten Farbstoffe enthalten in dem Arylteil benachbart zur Azogruppe eine zur Chelatbildung befähigte Gruppe und bilden dementsprechend mit Metallionen blaugrüne oder purpurne Farbstoff-Metall-Tridentatkomplexe, die gute spektrale Eigenschaften haben sollen. Es sind auch entsprechende Monoazofarbstoffe bekannt, die in 2-Stellung des 3-Pyridinolringes eine Aminogruppe tragen. Die hieraus durch Metallisierung mit Nickel- oder Kupferionen erhaltenen Metallkomplex-Bildfarbstoffe weisen einen stumpfen Farbton auf, der mit demjenigen der bekannten blaugrünen Bildfarbstoffe, etwa der Phthalocyaninfarbstoffe oder der 4-(4-Nitrophenylazo)-1-naphtholfarbstoffe in keiner Weise vergleichbar ist. Der damit verbundene Qualitätsverlust macht den Vorteil der raschen Diffusion oder der höheren Lichtbeständigkeit zunichte und steht einer technischen Verwendung hemmend im Weg.

Noch mehr gilt der Nachteil der ungünstigen Absorption für die gleichfalls in DE-A-27 40 719 sowie in US-A-4 147 544 und US-A-4 165 238 genannten 2-(5-Nitro-2-pyridylazo)-1-naphthole und die in US-A-4 204 870 und US-A-4 207 104 genannten 2-(5'--Sulfamoyl-2-pyridylazo)-4-alkoxy-1-naphthole und 2-(Benzothiazolylazo)-1-naphthole, die sich durch hohe Nebendichten im Wellenlängenbereich des blauen Lichtes als sogenannte «unechte» Blaugrünfarbstoffe erweisen.

Der vorliegenden Erfindung liegt die Aufgabe zugrunde Farbabspalter für die Freisetzung nachmetallisierbarer Monoazofarbstoffe bereitzustellen, die sich in Form ihrer Metallkomplexe durch besonders klare blaugrüne Farbtöne sowie durch aussergewöhnlich gute Lichtechtheit auszeichnen.

Es wurde gefunden, dass diese Aufgabe durch Bereitstellung von Farbabspaltern gelöst werden kann, die Monoazofarbstoffe der folgenden Formel I freisetzen.

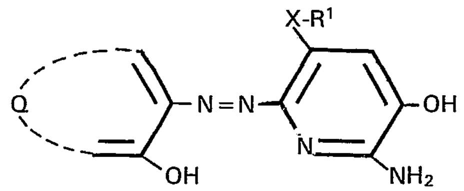

worin bedeuten

Q den zur Vervollständigung einer gegebenenfalls substituierten Phenyl- oder Naphthylgruppe erforderlichen Rest;

X -S-, $-SO_2-$, $-SO_2-NR^o-$ oder $-SO_2-O-$, wobei im Zweifelsfall die Sulfonylgruppe ($-SO_2-$) an den Pyridinolring gebunden ist;

$R^o$ Wasserstoff oder Alkyl;

$R^1$ einen aliphatischen, araliphatischen oder carbocyclisch oder heterocyclisch aromatischen Rest mit der Massgabe dass, wenn X die Gruppe $-SO_2-O-$ bedeutet, $R^1$ nur Aryl sein kann, oder falls X die Gruppe $-SO_2-NR^o-$ bedeutet, auch Wasserstoff.

Ein Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger durch Metallionen komplexierbarer 6-Arylazo-2-amino-3-pyridinolfarbstoff freigesetzt wird, dadurch gekennzeichnet, dass der 6--Arylazo-2-amino-3-pyridinolfarbstoff der Formel I entspricht.

Ein weiterer Gegenstand der Erfindung ist ein Farbbild, bestehend aus einer auf einem Schichtträger angeordneten bildmässigen Verteilung eines blaugrünen Farbstoffes, dadurch gekennzeichnet, dass der blaugrüne Farbstoff ein Nickelkomplex eines Monoazofarbstoffes der Formel I oder eines Farbabspalters der Formel IV ist.

Bevorzugte Farbabspalter gemäss der vorliegenden Erfindung setzen einen Monoazofarbstoff einer der Formeln II und III frei.

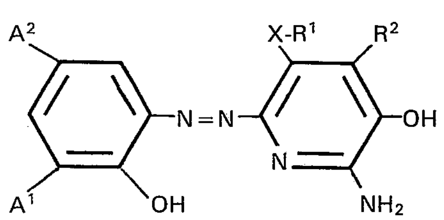

II

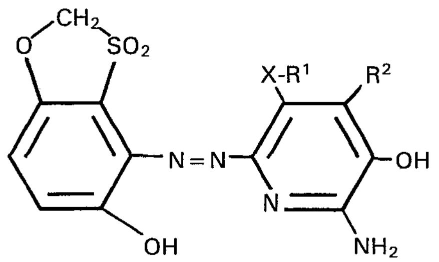

III

worin X und $R^1$ die bereits angegebene Bedeutung haben,

$R^2$ für H, Halogen oder einen Substituenten mit Elektronenakzeptoreigenschaften steht, und $A^1$ und $A^2$ für Substituenten mit Elektronenakzeptoreigenschaften stehen.

Bevorzugt steht $A^1$ für einen starken Elektronenakzeptor, z.B. eine der Gruppen $-NO_2$, -CN oder $-SO_2-R^3$, worin $R^3$ -OH, eine gegebenenfalls substituierte oder gegebenenfalls cyclische Aminogruppe, Alkyl oder Aryl bedeutet, während der Elektronenakzeptorcharakter von $A^2$ bevorzugt schwächer ausgeprägt ist. Geeignete Beispiele für $A^2$ sind etwa Halogen, insbesondere Cl, $-SO_2-R^4$, wobei $R^4$ im wesentlichen in gleicher Weise definiert ist wie $R^3$, ferner $-CF_3$ und COOH.

Ein durch $R^1$ dargestellter aliphatischer Rest ist beispielsweise eine Alkylgruppe mit 1 bis 5 C-Atomen. Ein durch $R^1$ dargestellter araliphatischer Rest ist beispielsweise Benzyl oder β-Phenylethyl. Ein durch $R^1$ dargestellter carbocyclisch aromatischer Rest (Aryl) ist beispielsweise Phenyl. Beispiele für heterocyclisch aromatische Reste sind Pyrimidyl, Benzimidazolyl, Triazolyl. Die genannten Reste können weiter substituiert sein. Ein Phenylrest kann beispielsweise durch Amino, Acylamino, Alkoxy- oder Carboxyl substituiert sein.

Ein durch $R^2$ dargestellter Substituent mit Elektronenakzeptoreigenschaften ist beispielsweise einer der Substituenten, die bei der Definition von $A^1$ und $A^2$ genannt worden sind, jedoch nicht $-NO_2$, oder ein Phenyl- oder Thienylrest, der gegebenenfalls mit einem der genannten Substituenten substituiert ist.

Eine bei der Definition von $A^1$ bzw. $A^2$ erwähnten Aminogruppe kann ein- oder zweifach substituiert sein, z.B. durch Alkyl, Aralkyl, Aryl, eine heterocyclische Gruppe oder Acyl, beispielsweise Alkylsulfonyl oder Arylsulfonyl. Eine cyclische Aminogruppe ist beispielsweise eine Pyrrolidin-, Piperidin-, Perhydroazepin-, Morpholin-, N'-Alkylpiperazin-, Indolin- oder Tetrahydrochinolingruppe.

Acylreste (Acylamino) leiten sich allgemein ab von aliphatischen oder aromatischen Carbon- oder Sulfonsäuren, von Carbaminsäuren oder Sulfaminsäuren oder von Kohlensäurehalbestern.

Eine durch $R^3$ bzw. $R^4$ dargestellte Acylaminogruppe enthält beispielsweise als Acylrest eine Alkylsulfonyl- oder Arylsulfonylgruppe, so dass $A^1$ bzw. $A^2$ eine Disulfimidgruppe beinhaltet.

Mit obigen Angaben ist das für die spektralen Eigenschaften verantwortliche chromophore System der aus den erfindungsgemässen Farbabspaltern freigesetzten Monoazofarbstoffe vollständig beschrieben.

Die Farbstoffe können darüber hinaus zur Anpassung an einen speziellen Anwendungszweck weitere geeignete Substituenten enthalten. So verfügen die freigesetzten Farbstoffe, z.B. in Form einer der vorhandenen Hydroxylgruppen oder in Form einer der bereits bei $R^1$ bis $R^4$ erwähnten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit den zuvor genannten das Diffusions- und Beizverhalten modifizierenden Gruppen. Die erwähnte funktionelle Gruppe kann beispielsweise an einen Alkyl-, Hetaryl- oder Arylrest gebunden sein, der seinerseits Bestandteil eines der unter $R^1$ bis $R^4$ erwähnten Substituenten ist.

Die in DE-A-2740719 beschriebenen 2-Amino-3-Pyridinol-Azofarbstoffe geben mit Nickel- oder Kupfer-II-ionen grünstichig blaue bis blaue Komplexe. Erfindungsgemäss wird durch Einführung der Gruppe $-X-R^1$ in den 2-Amino-3-pyridinolring in der Nuance der Komplexe eine bathochrome Verschiebung bewirkt, ohne dass die Nebendichten ansteigen. Darüber zeigt es sich, dass die erhaltenen Komplexe, insbesondere die Nickelkomplexe blaugrüne Bildfarbstoffe von ausserordentlich hoher Lichtechtheit ergeben.

Den aus den erfindungsgemässen Farbabspaltern freigesetzten Farbstoffen der Formeln I, bzw. II und III ist eigen, dass die Absorptionsspektren der Farbstoffe gegenüber denen der Komplexe nach kürzeren Wellenlängen verschoben sind. Eine alkalilabile Blokkierung der chelatbildenden Hydroxylgruppe durch Acylgruppen oder verwandte Schutzgruppen ist dazu nicht erforderlich, doch führt die Acylierung zu einer weiteren Verschiebung der Absorption des Chromophors nach kürzeren Wellenlängen. Zusätzlich reduziert sie die Farbstärke, so dass die Absorption der Schicht mit dem eingelagerten Farbabspalter die Sensibilisierung der zugeordneten Silberhalogenidemulsionsschicht nicht durch einen Filtereffekt stört.

Die Formeln I bzw. II und III beziehen sich auf die erfindungsgemäss bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäss einer der angegebenen Formeln an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel I an den Trägerrest kann beispielsweise über einen der Substituenten $R^1$ bis $R^4$ erfolgen oder über ein Sauerstoffatom, das im freigesetzten Monoazofarbstoff das Sauerstoffatom einer phenolischen Hydroxylgruppe ist. Die erfindungsgemässen Farbabspalter lassen sich dementsprechend durch die folgende Formel IV darstellen

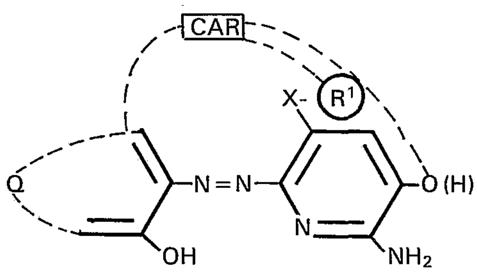

IV

worin

Q, X und $R^1$ die bereits angegebenen Bedeutungen haben,

CAR einen mindestens einen Ballastrest enthaltenden redoxaktiven Trägerrest bedeutet,

und die gestrichelten Linien mögliche Verknüpfungsstellen kennzeichnen. In den erfindungsgemässen Farbabspaltern der Formel IV ist somit der Trägerrest gegebenenfalls über ein geeignetes Zwischenglied mit der durch Q vervollständigten Phenyl- oder Naphthylgruppe oder mit dem Sauerstoffatom der Hydroxylgruppe am Pyridinring verbunden oder als Substituent in der durch $R^1$ dargestellten Gruppe enthalten. In den Farbabspaltern können die in der Formel IV dargestellten Hydroxylgruppen auch in verkappter Form vorliegen, z.B. in Form einer Gruppe der Formel -O-Acyl, worin Acyl ein unter alkalischen Bedingungen hydrolysierbarer Acylrest ist.

Der durch CAR dargestellte Trägerrest weist ausser einem Ballastrest mindestens eine Gruppierung auf, die als Funktion der Entwicklung einer Silberhalogenidemulsionsschicht spaltbar ist, so dass der an den Trägerrest gebundene Farbstoff gegebenenfalls zusammen mit einem kleinen Bruchstück des ursprünglichen Trägerrestes von dem Ballastrest abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemässen Farbabspaltern kann es sich um eine Vielfalt von Verbindungstypen handeln, die sich sämtlich durch ein in seiner Bindungsfestigkeit redoxabhängiges Bindeglied auszeichnen, welches den Chromophor mit dem diffusionsfesten Trägerrest verknüpft.

In diesem Zusammenhang ist auf eine zusammenfassende Darstellung des Sachgebiets in Angew. Chem. 95 (1983), Heft 3, Seiten 165-184 zu verweisen, in der die wichtigsten der bekannten Systeme beschrieben sind.

Als besonders vorteilhaft erweisen sich hierbei redoxaktive Farbabspalter der Formel

BALLAST — REDOX — FARBSTOFF

worin bedeuten

BALLAST einen Ballastrest;

REDOX eine redoxaktive Gruppe, d.h. eine Gruppe die unter den Bedingungen der alkalischen Entwicklung oxidierbar oder reduzierbar ist und je nachdem, ob sie im oxidierten oder im reduzierten Zustand vorliegt, in unterschiedlichem Ausmass einer Eliminierungsreaktion, einer nukleophilen Verdrängungsreaktion, einer Hydrolyse oder einer sonstigen Spaltungsreaktion unterliegt mit der Folge, dass der Rest FARBSTOFF abgespalten wird, und

FARBSTOFF den Rest eines diffusionsfähigen Farbstoffes, im vorliegenden Fall eines Farbstoffes gemäss Formel I.

Als Ballastreste sind solche Reste anzusehen, die es ermöglichen, die erfindungsgemässen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden: -NHCO-, $-NHSO_2-$, -NR-, wobei R Wasserstoff oder Alkyl bedeutet, -O- oder -S-. Zusätzlich kann der Ballastrest auch wasserlöslichmachende Gruppen enthalten, wie z.B. Sulfogruppen oder Carboxylgruppen, die auch in anionischer Form vorliegen können. Da die Diffusionseigenschaften von der Molekülgrösse der verwendeten Gesamtverbindung abhängen, genügt es in bestimmten Fällen, z.B., wenn das verwendete Gesamtmolekül gross genug ist, als Ballastreste auch kürzerkettige Reste zu verwenden.

Redoxaktive Trägerreste der Struktur BALLAST-REDOX- und entsprechende Farbabspalter sind in den verschiedensten Ausführungsformen bekannt. Auf eine detaillierte Darstellung kann an dieser Stelle verzichtet werden im Hinblick auf den genannten Übersichtsartikel im Angew. Chem. 95, S. 165-184 (1983).

Lediglich zur Erläuterung sind im folgenden einige Beispiele für redoxaktive Trägerreste aufgeführt, von denen nach Massgabe einer bildmässig stattgefundenen Oxidation oder Reduktion abgespalten wird:

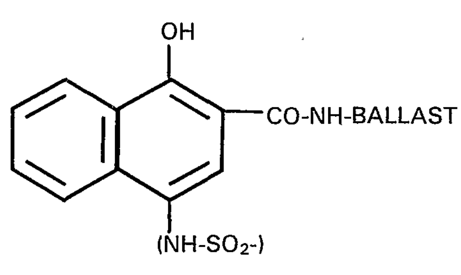

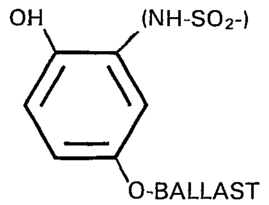

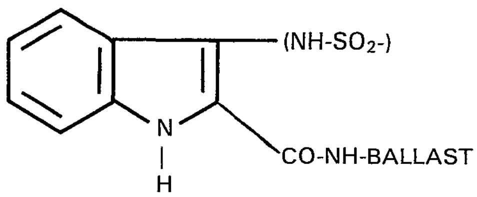

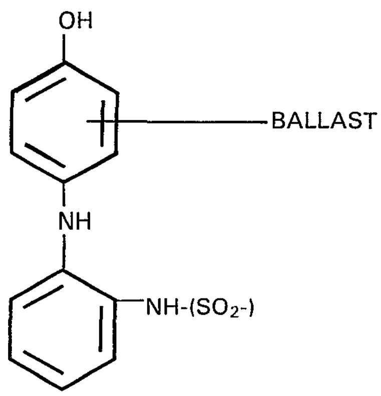

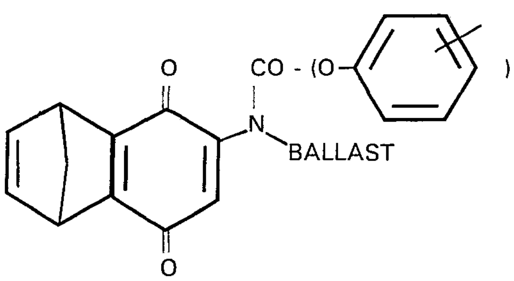

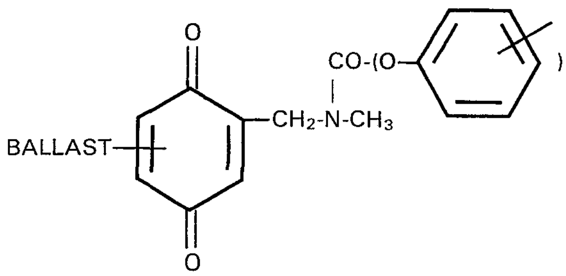

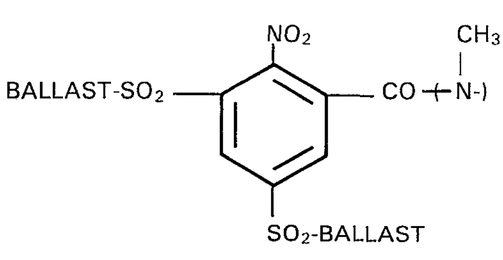

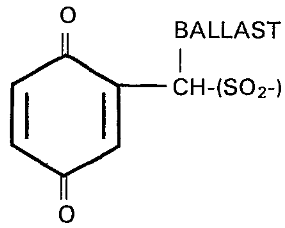

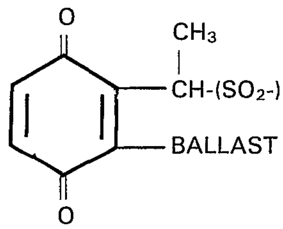

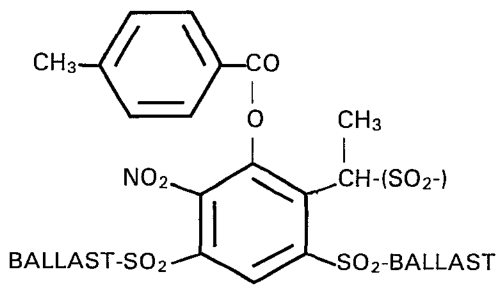

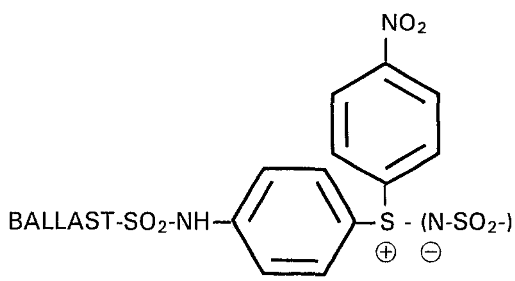

Die in Klammern eingeschlossenen Gruppen sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Bedeutung der Reste $R^1$ bis $R^4$ in der Formeln I, II und III erwähnt worden sind und die einen unmittelbaren Einfluss auf die Absorptions- und Komplexbildungseigenschaften der erfindungsgemässen Farbstoffe ausüben können. Die funktionelle Gruppe kann andererseits aber auch von dem Chromophor des erfindungsgemässen Farbstoffes durch ein Zwischenglied getrennt sein, indem sie sich als Substituent in einer der für $R^1$ bis $R^4$ definierten Gruppen befindet, ohne dass hierdurch ein Einfluss auf die Absorptions- und Komplexbildungseigenschaften wirksam werden müsste. Die funktionelle Gruppe kann jedoch gegebenenfalls zusammen mit dem Zwischenglied von Bedeutung sein für das Diffusions- und Beizverhalten der erfindungsgemässen Farbstoffe. Geeignete Zwischenglieder sind beispielsweise Alkylen- oder Arylengruppen.

Die zuletzt erwähnten Klassen von reduzierbaren, reduktiv spaltbaren Farbabspaltern werden zweckmässigerweise zusammen mit sogenannten Elektronendonorverbindungen (ED-Verbindungen) verwendet. Letztere wirken als Reduktionsmittel, das bei der Entwicklung des Silberhalogenids bildmässig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in DE-A-2809716 beschrieben sind. Besonders günstige ED-Verbindungen sind Gegenstand von DE-A-3006268.

Beispiele geeigneter ED-Verbindungen sind im folgenden aufgeführt.

ED 1

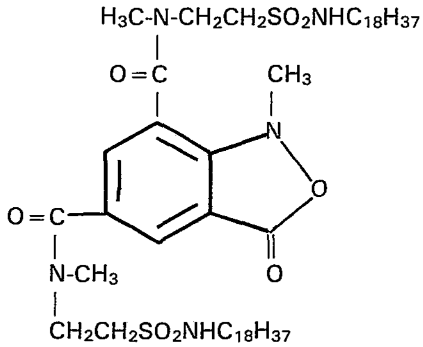

ED 2

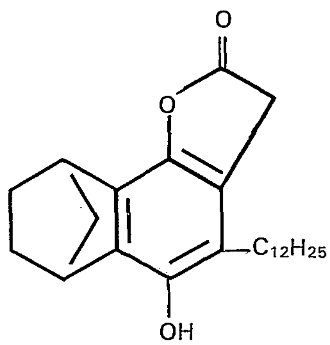

ED 3

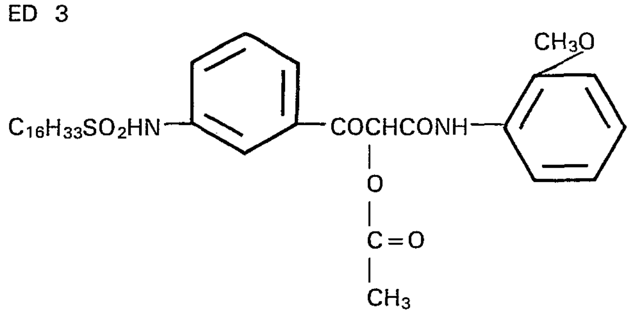

ED 4

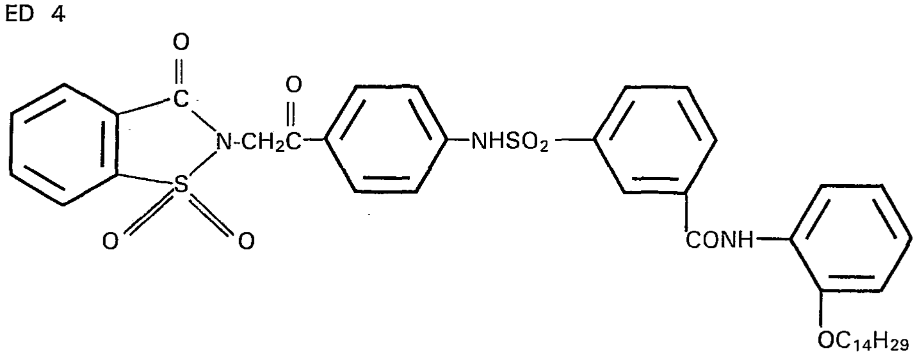

ED 5

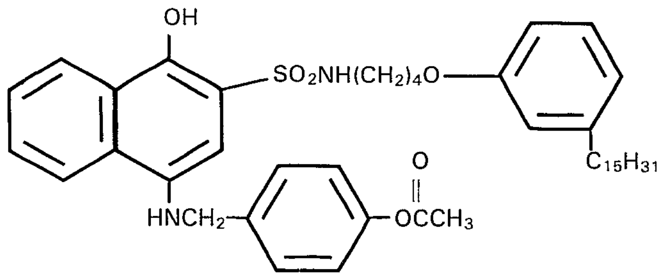

ED 6

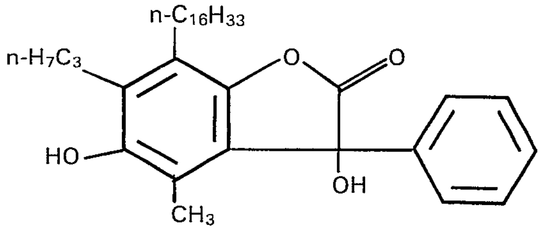

ED 7

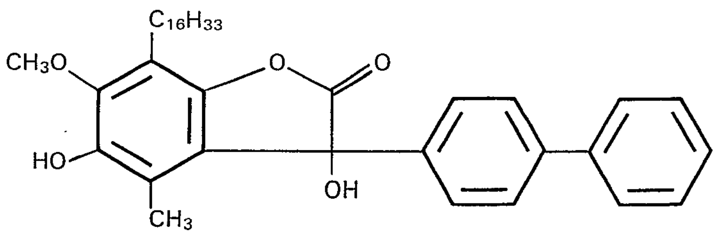

Zur Erläuterung der Erfindung sind in der folgenden Aufstellung Beispiele für metallisierbare Monoazofarbstoffe angegeben, die aus den erfindungsgemässen Farbabspaltern freigesetzt werden. Farbstoff 1 ist Zwischenprodukt.

*Farbstoff*

1)

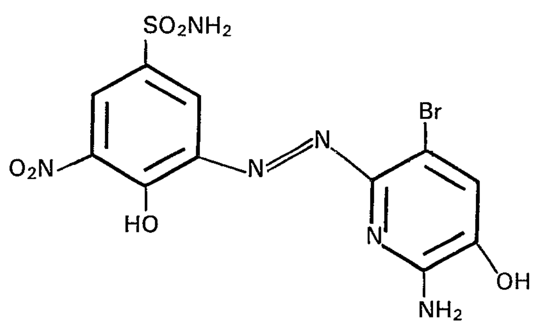

2)

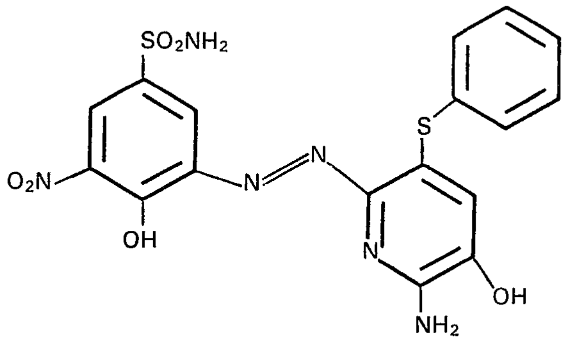

3)

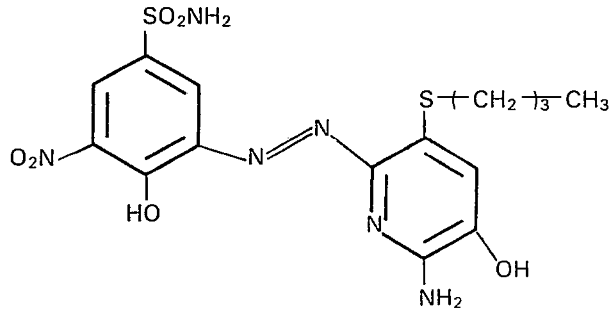

4)

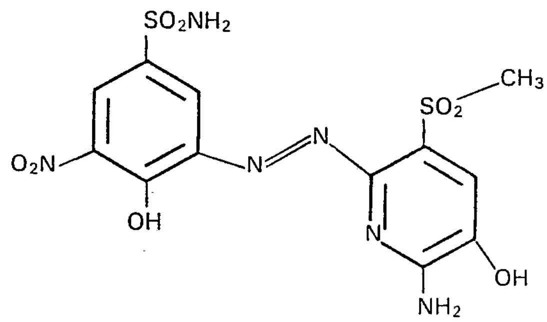

5)

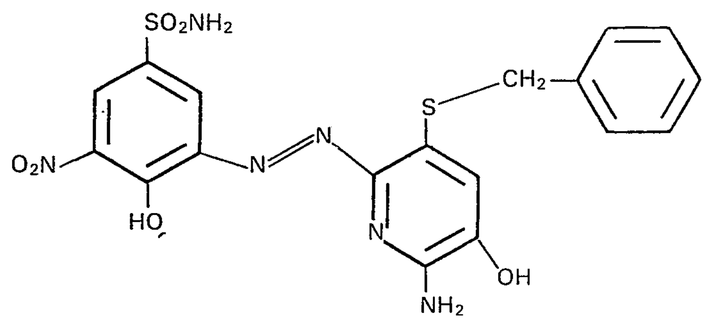

6)

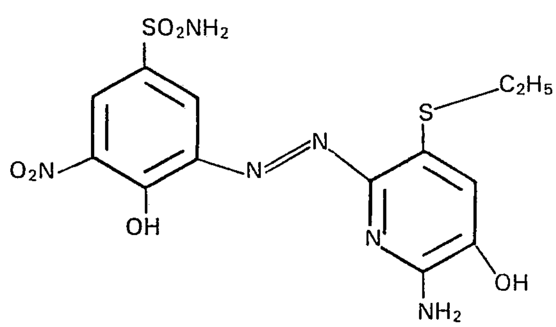

7)

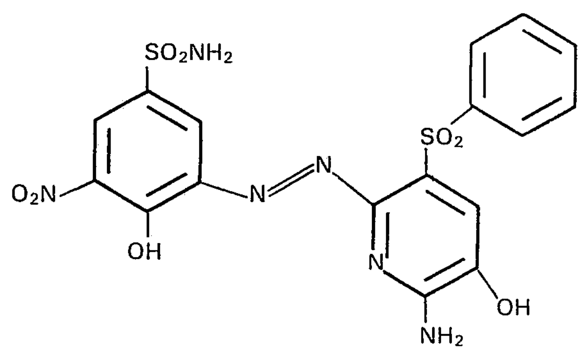

8) 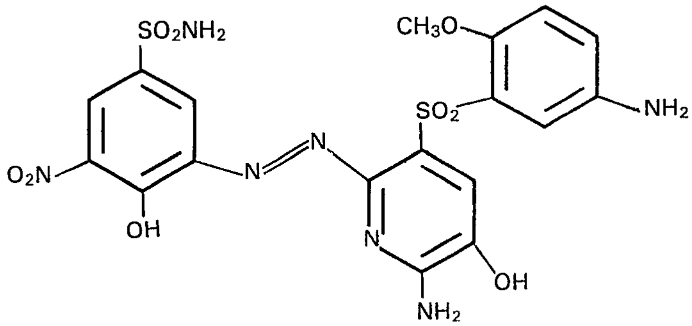

9) 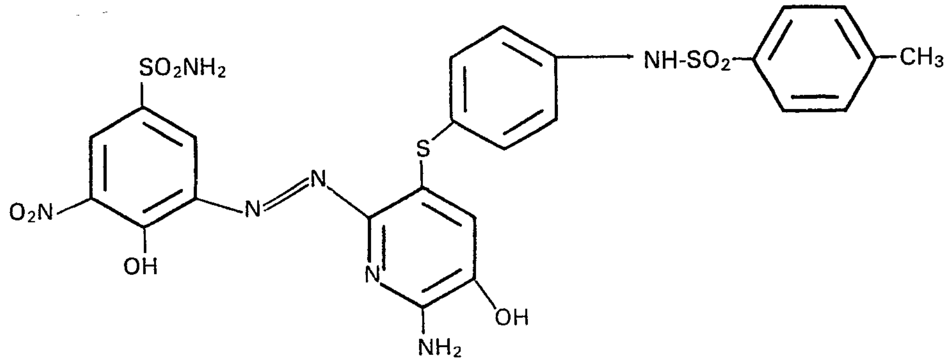

10) 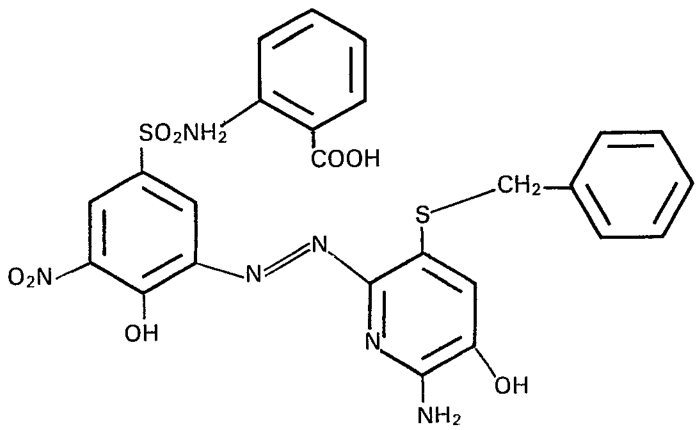

11) 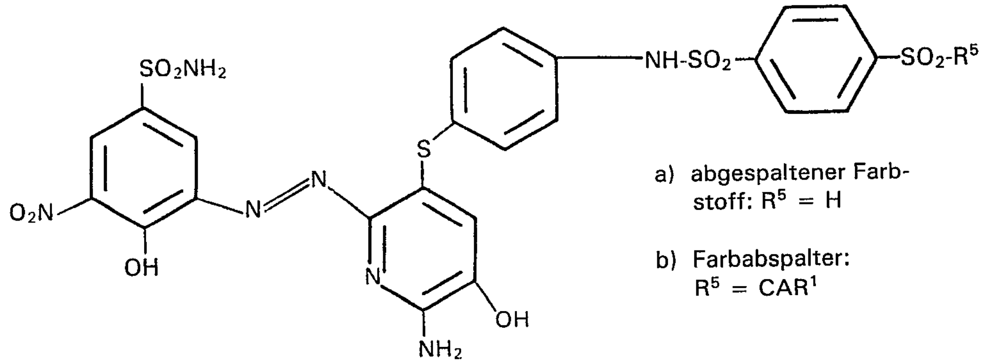

a) abgespaltener Farbstoff: $R^5 = H$

b) Farbabspalter: $R^5 = CAR^1$

12) 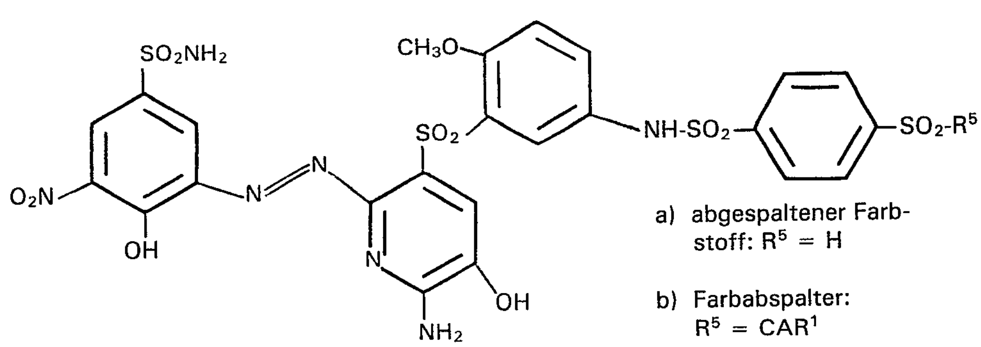

a) abgespaltener Farbstoff: $R^5 = H$

b) Farbabspalter: $R^5 = CAR^1$

13)

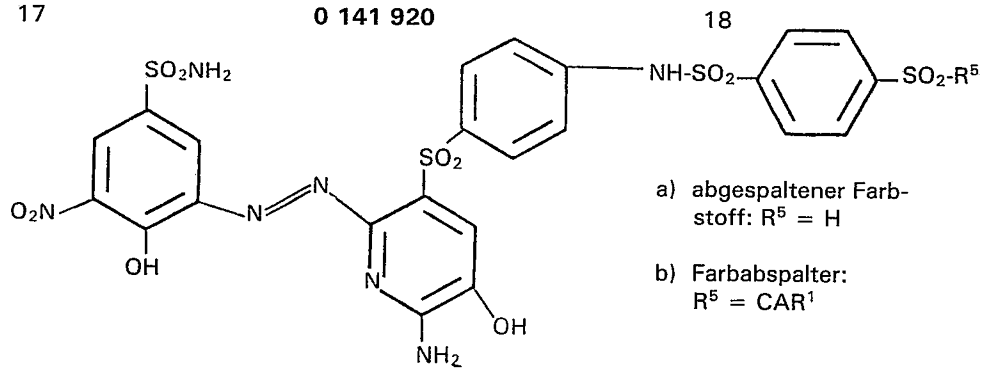

a) abgespaltener Farbstoff: $R^5 = H$

b) Farbabspalter: $R^5 = CAR^1$

14)

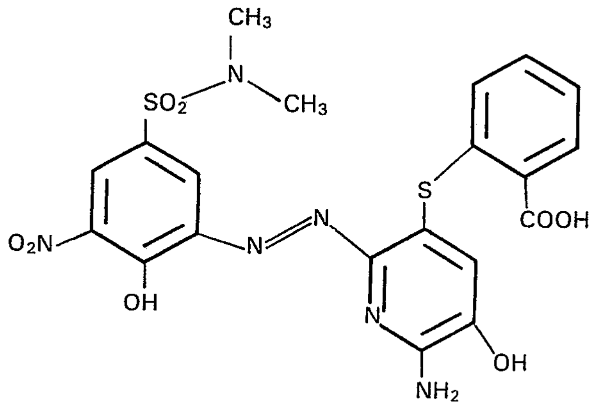

15)

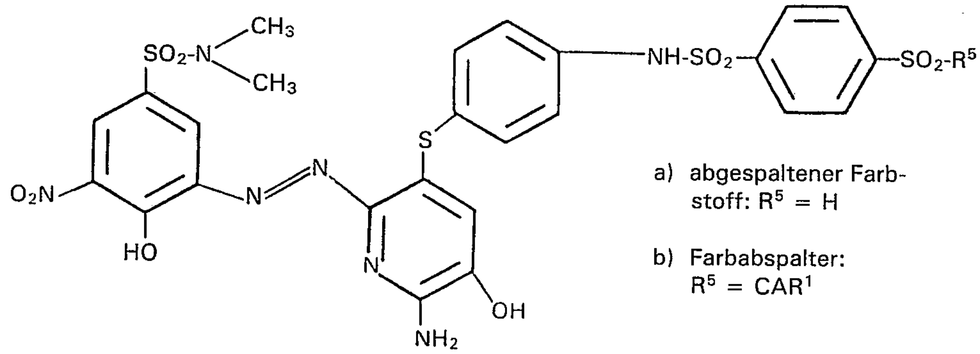

a) abgespaltener Farbstoff: $R^5 = H$

b) Farbabspalter: $R^5 = CAR^1$

16)

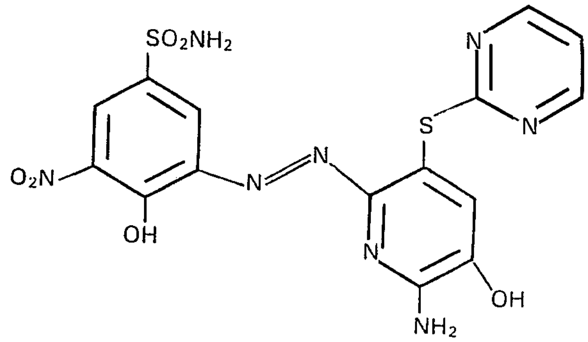

17)

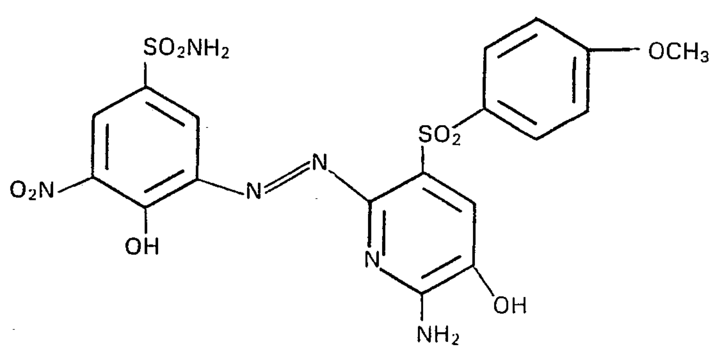

18) 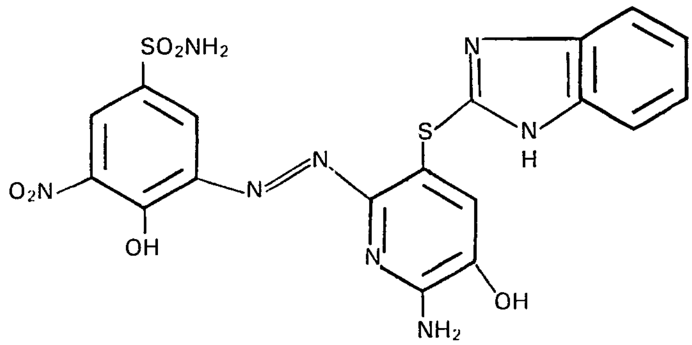

19) 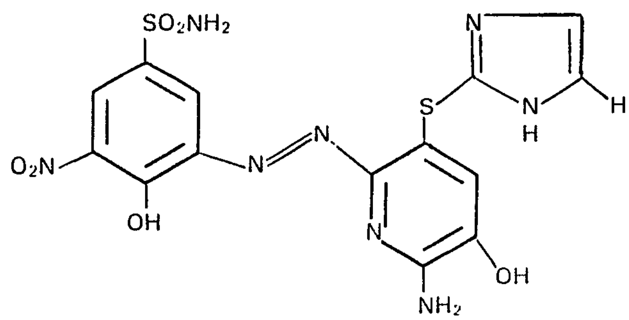

20) 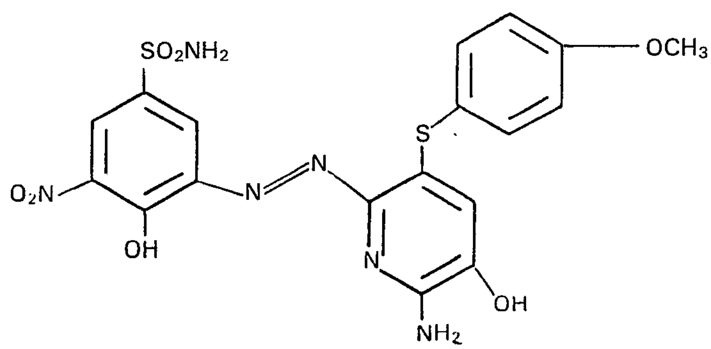

21) 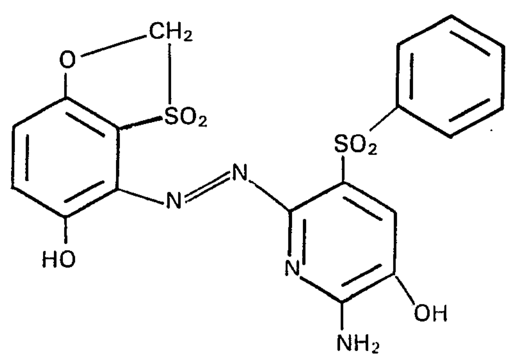

22) 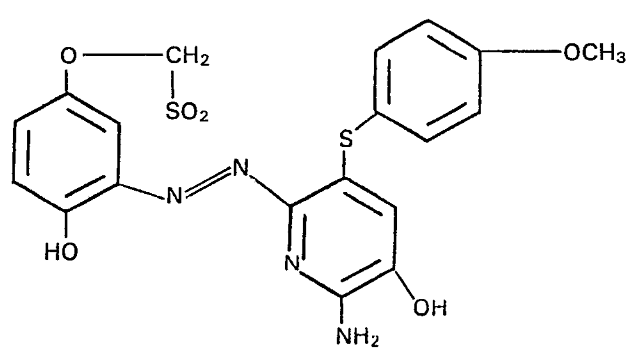

23)

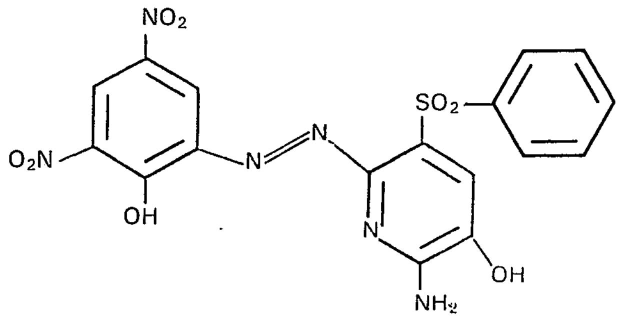

24)

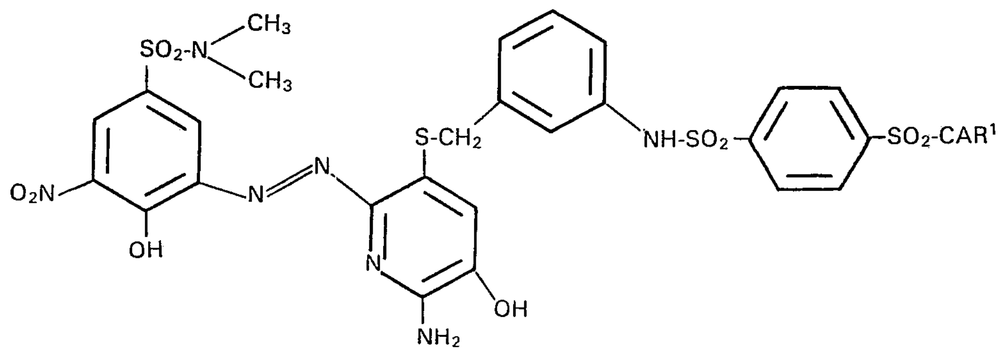

25)

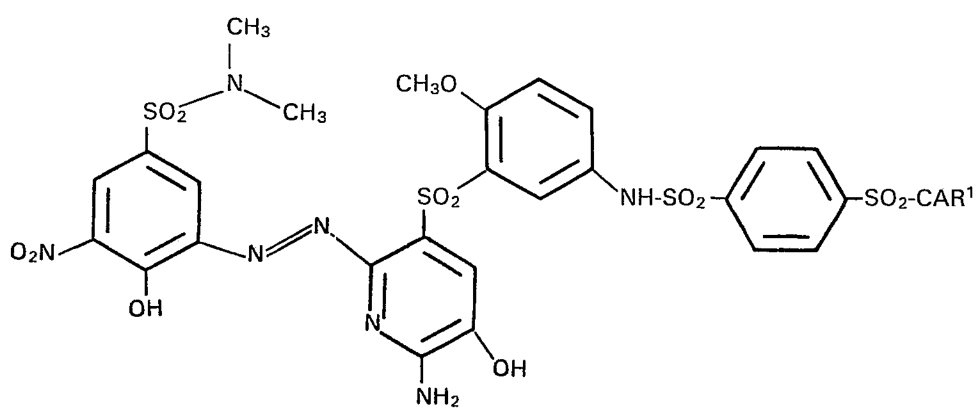

26)

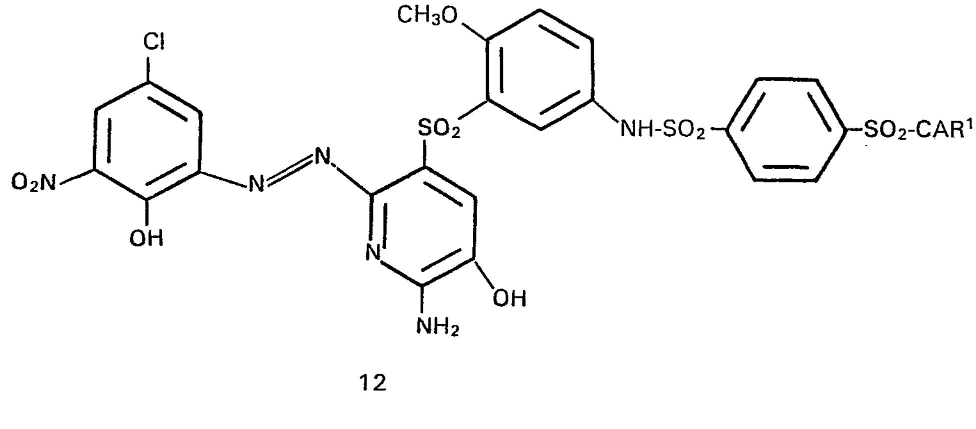

27)

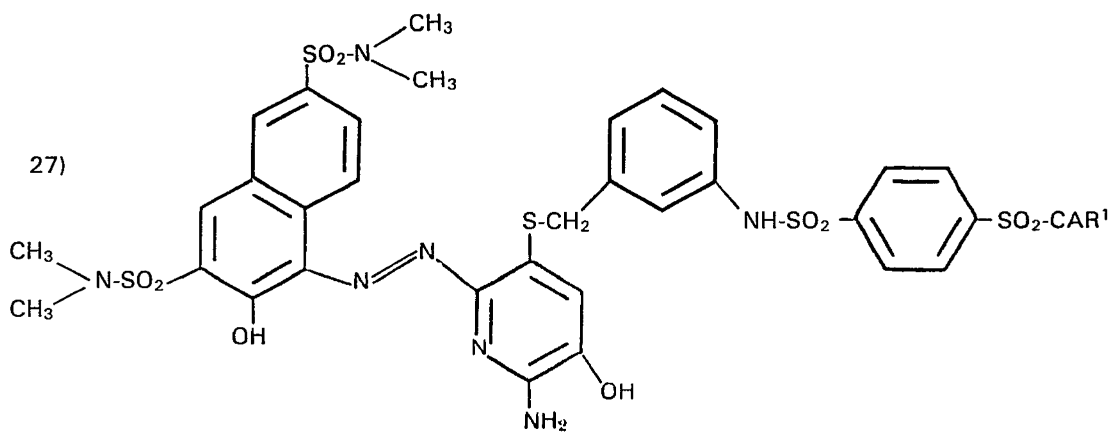

28)

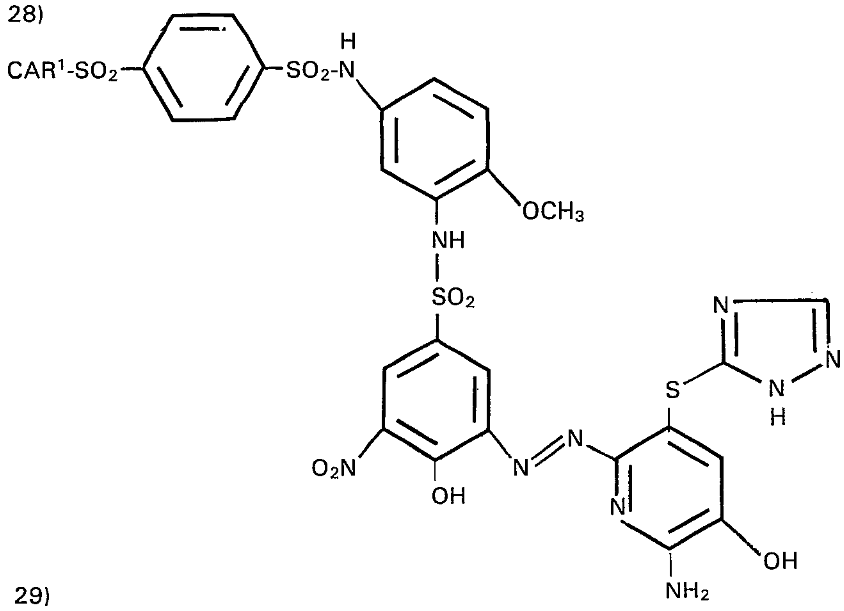

29)

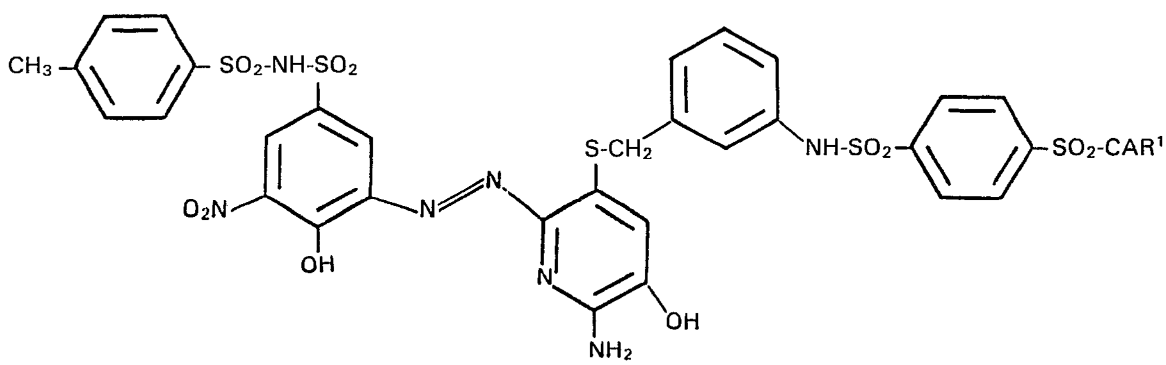

30)

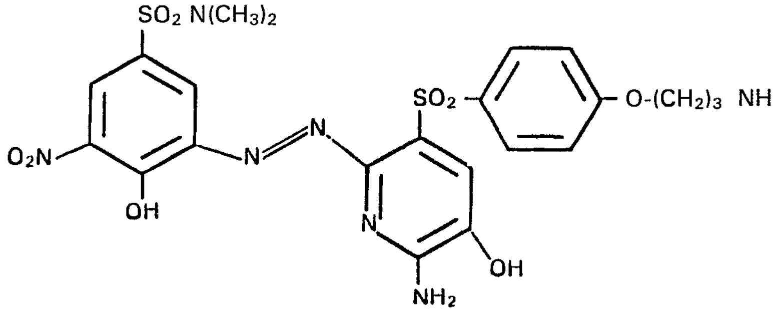

31) 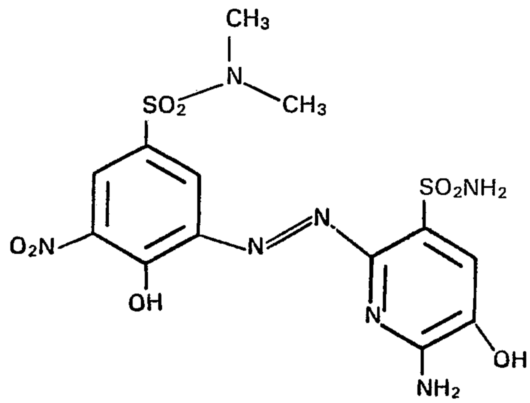

32)

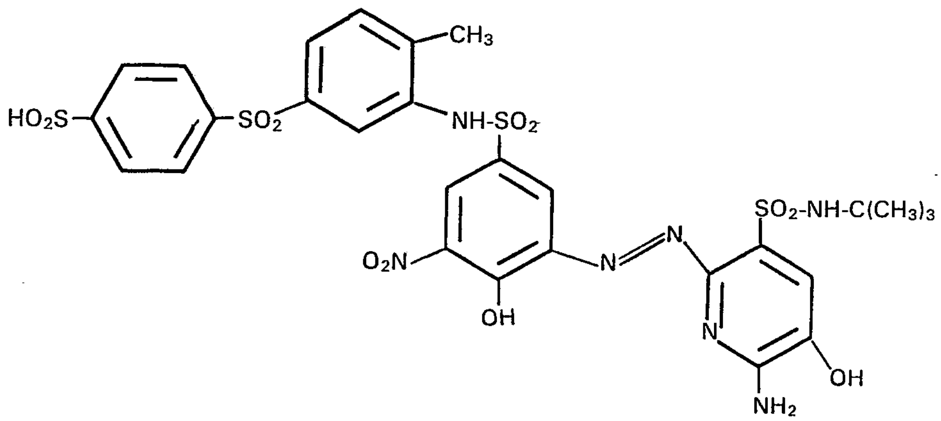

33) 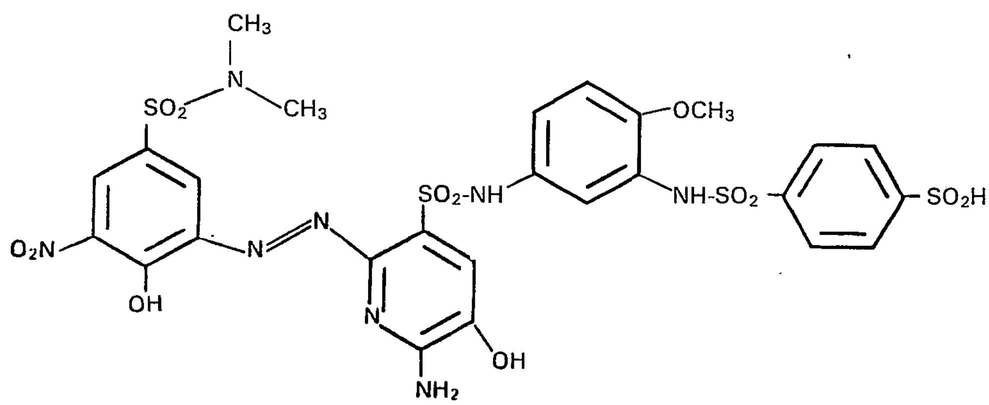

34) 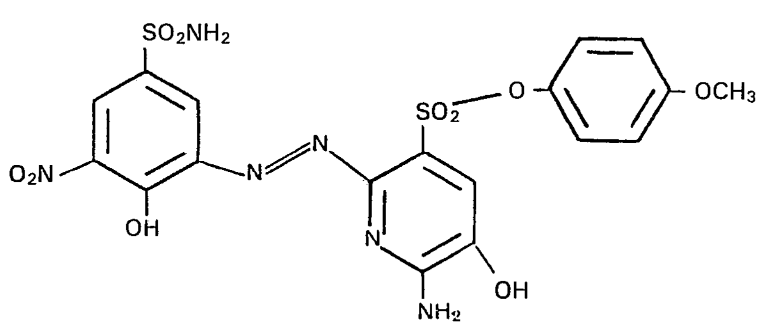

35)

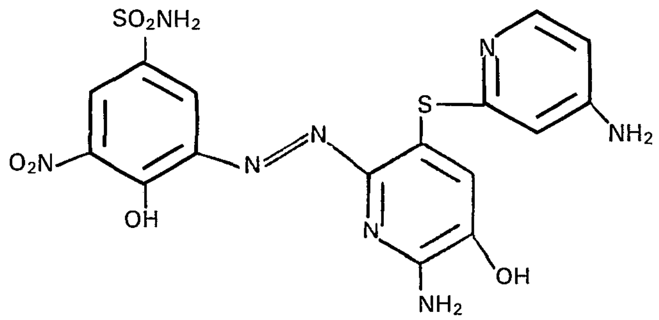

36)

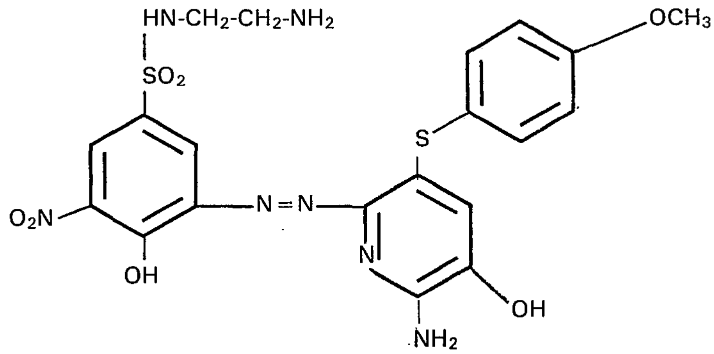

CAR[1] =

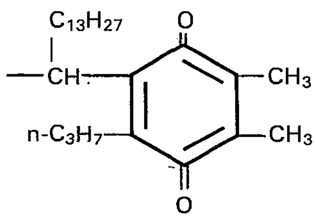

Bei den angegebenen Farbstoffen handelt es sich um diffusionsfähige Farbstoffe, die aus entsprechenden Farbabspaltern freigesetzt worden sind, um Modellfarbstoffe, die durch bekannte präparative Verfahren ohne störende Veränderung in Lichtechtheit und Absorption unter Bildung von Farbabspaltern mit abspaltbaren Trägerresten verknüpft werden können, oder um die Farbabspalter selbst. Aus letzteren werden erfindungsgemäss bei der Entwicklung bildmässig die diffusionsfähigen Farbstoffe freigesetzt.

Beispiele für erfindungsgemässe Farbabspalter sind im folgenden aufgeführt.

Farbabspalter 1 = Farbstoff 11 b
Farbabspalter 2 = Farbstoff 12 b
Farbabspalter 3 = Farbstoff 13 b
Farbabspalter 4 = Farbstoff 15 b

Farbabspalter 5

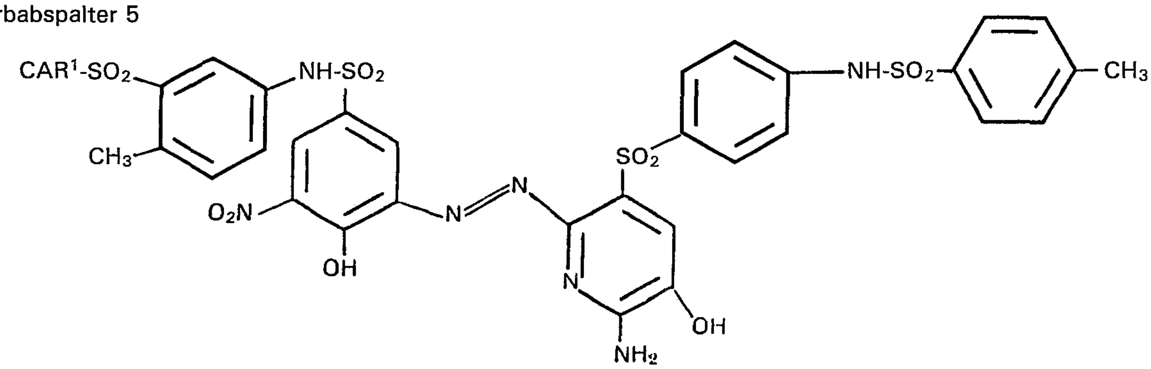

Farbabspalter 6

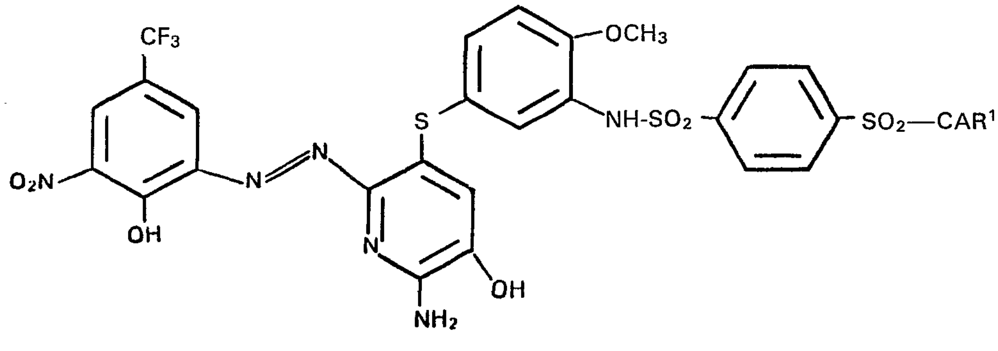

Farbabspalter 7

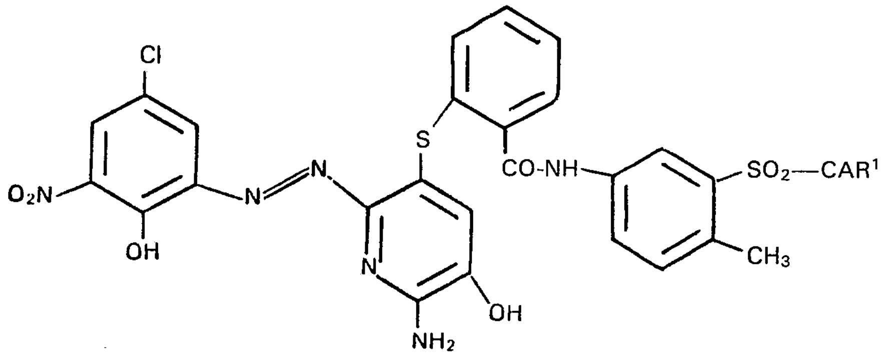

Farbabspalter 8

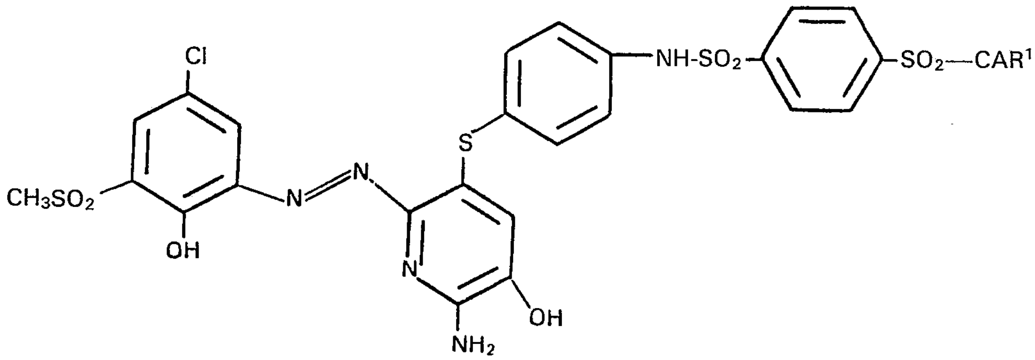

Farbabspalter 9

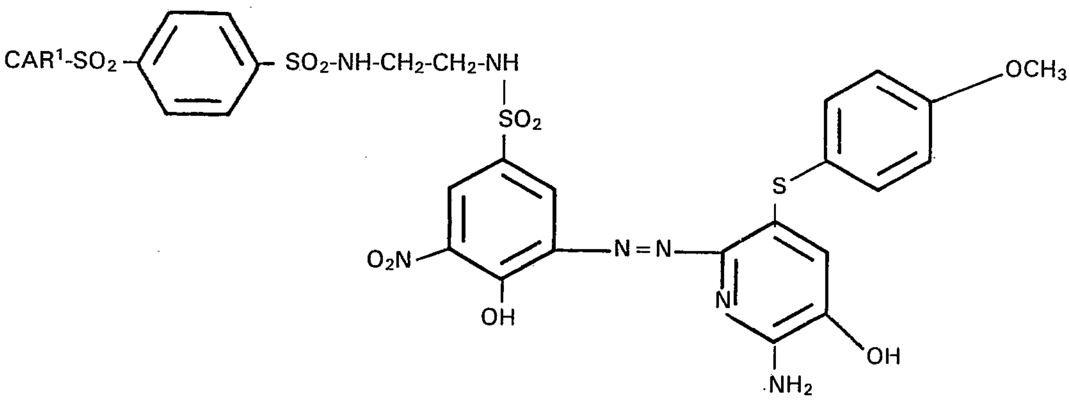

Farbabspalter 10

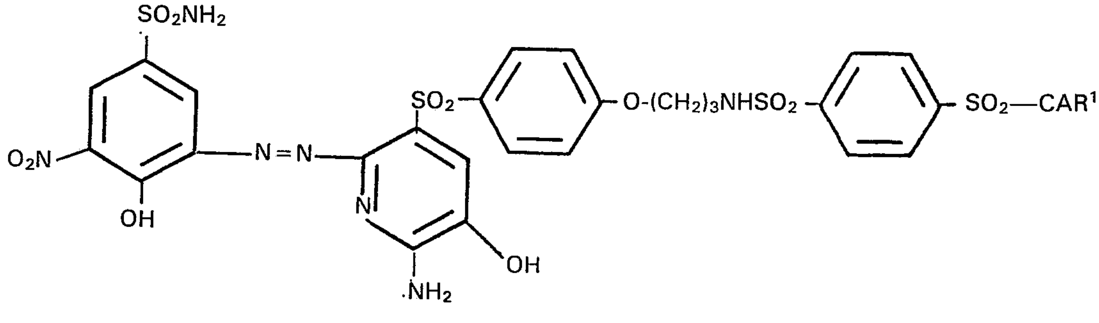

Farbabspalter 11

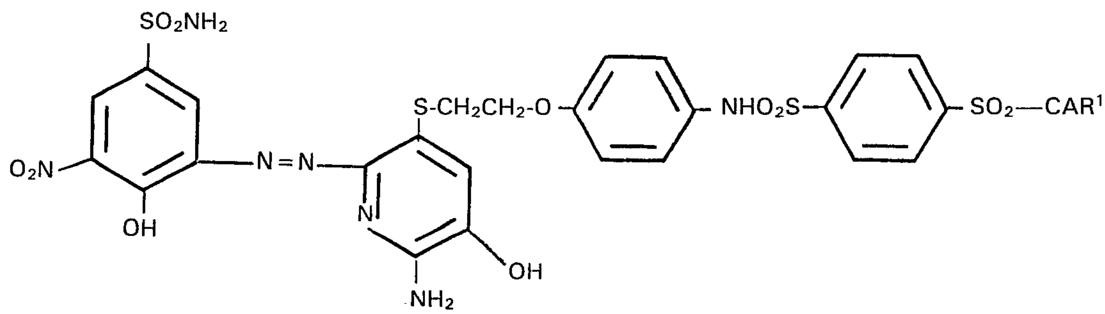

Farbabspalter 12

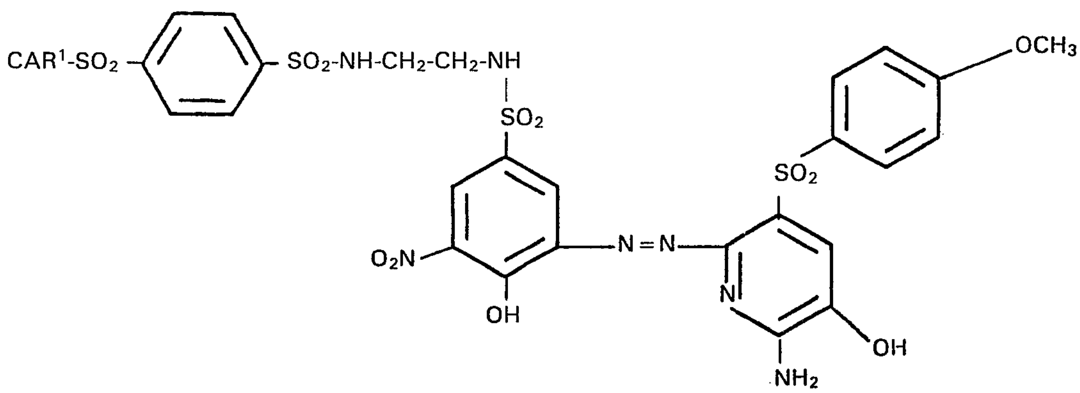

Farbabspalter 13 = Farbstoff 25
Farbabspalter 14 = Farbstoff 26
Farbabspalter 15 = Farbstoff 27
Farbabspalter 16 = Farbstoff 28
Farbabspalter 17 = Farbstoff 29

Die Herstellung der Farbstoffe erfolgt in an sich bekannter Weise durch Kupplung diazotierter Amine der Formel VI

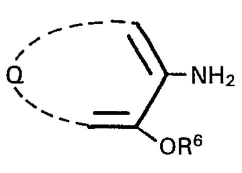

VI

worin Q die angegebene Bedeutung hat und $R^6$ für H, $-SO_3H$ oder Acyl steht, in wässrigem oder wässrig organischem Medium mit halogenierten 2-Amino-pyridinolen-3 unter Bildung eines als Zwischenprodukt dienenden Farbstoffes der Formel VII

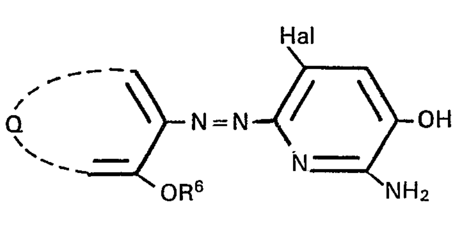

VII

worin Q und $R^6$ die angegebene Bedeutung haben und Hal für Cl oder Br steht.

Der als Zwischenprodukt in gewöhnlich sehr reiner Form anfallende Farbstoff wird in einem weiteren Reaktionsschritt entweder mit einer Thiolverbindung oder mit einer Sulfinsäure in Gegenwart einer Base zur Neutralisation des freigesetzten Halogenwasserstoffes umgesetzt.

Diese Reaktion ist bekannt und in DE-A-2 745 024 beschrieben.

Des weiteren kann die Herstellung der Farbstoffe in bekannter Weise durch Kupplung eines diazotierten Amins der Formel VI auf ein 2-Amino-3-pyridinol-5-sulfonamid oder einen 2-Amino-3-pyridinol-5-sulfonsäurearylester erfolgen. Die 2-Amino-3-pyridinol-5-sulfonsäureamide sind z.B. bekannt aus US-A-4 395 477, US-A-4 195 994 und US-A-4 346 161. Ebenso sind dort auch einige der Farbstoffe und ihre Schwermetallkomplexe beschrieben. Die Sulfonsäurederivate der Farbstoffe können auch ausgehend von den entsprechenden Br-Farbstoffen hergestellt werden durch Austausch des Bromatoms gegen eine Sulfogruppe wie beschrieben in DE-A-2 236 245, worauf in bekannter Weise die entsprechenden Farbstoffsulfonamide und Farbstoffsulfonsäurearylester herstellt werden können.

Als Diazokomponenten geeignete Aminophenole («Amin») sind im folgenden angegeben.

*Amin 1*

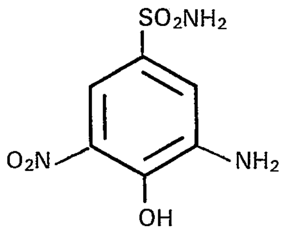

*Amin 2*

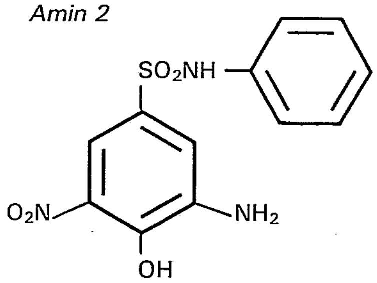

*Amin 3*

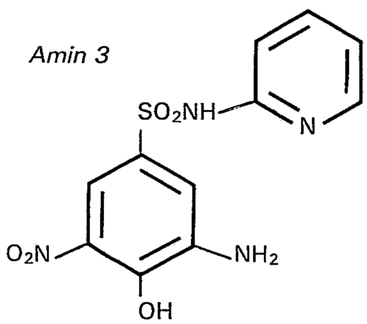

*Amin 4*

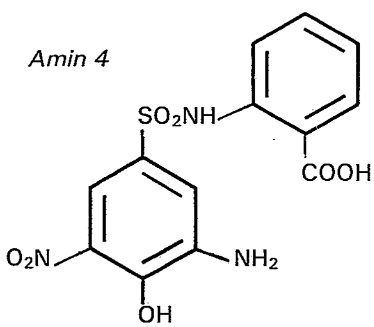

*Amin 5*

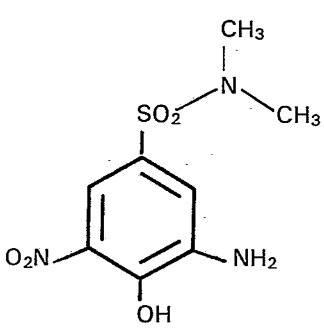

*Amin 6*

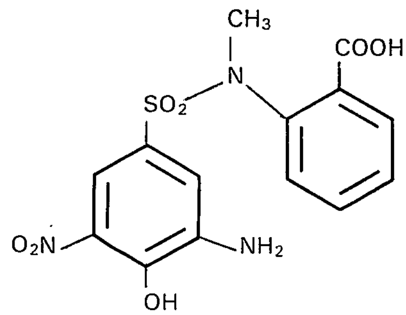

*Amin 7*

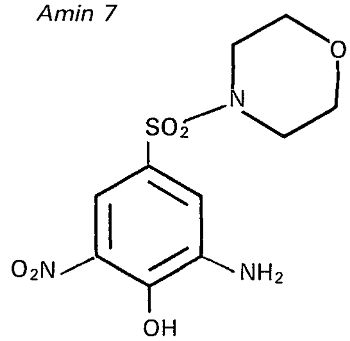

*Amin 8*

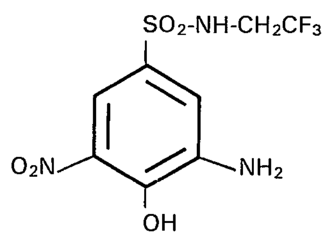

*Amin 9*

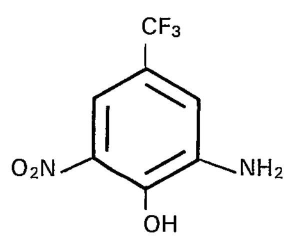

*Amin 10*

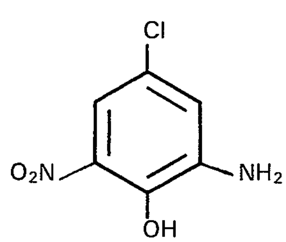

*Amin 11*

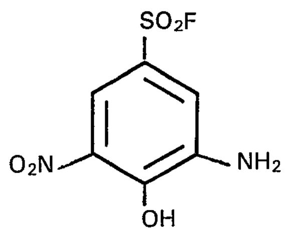

*Amin 12*

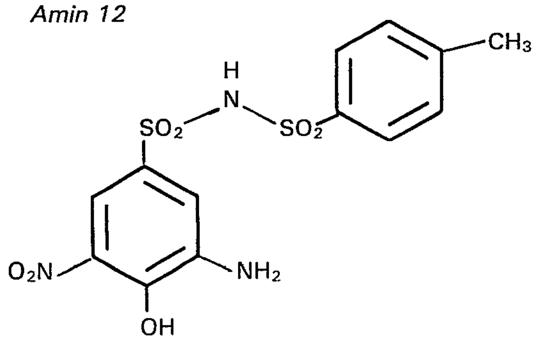

*Amin 13*

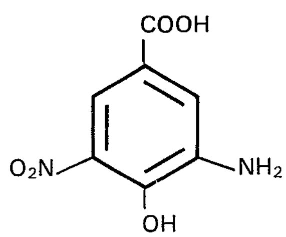

*Amin 14*

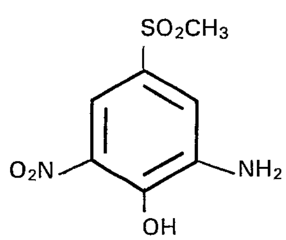

*Amin 15*

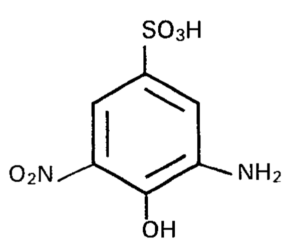

*Amin 16*

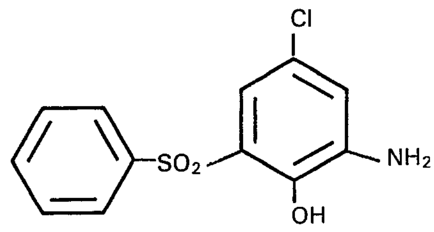

*Amin 17*

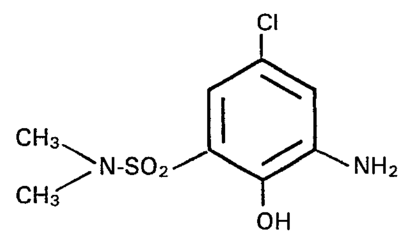

*Amin 18*

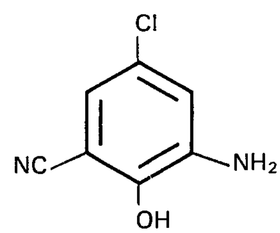

*Amin 19*

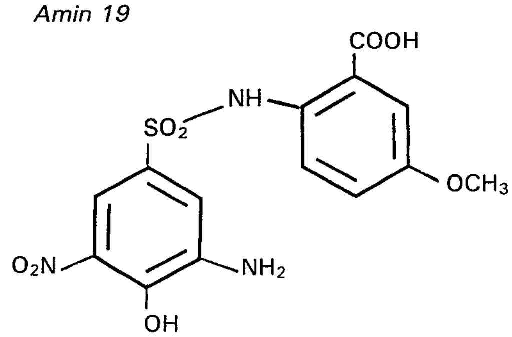

*Amin 20*

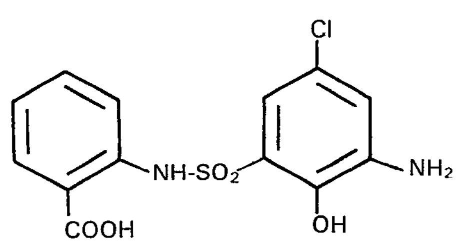

*Amin 21*

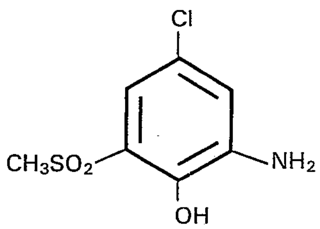

*Amin 22*

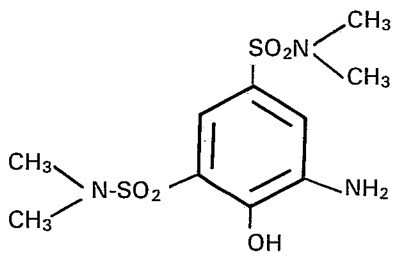

*Amin 23*

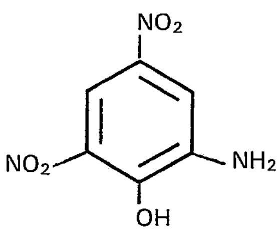

*Amin 24*

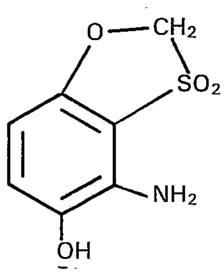

*Amin 25*

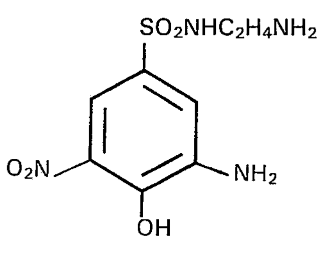

Wegen weiterer geeigneter Diazokomponenten wird auf DE-A-3 107 540 hingewiesen.

Geeignete Kupplungskomponenten sind z.B. 2--Amino-5-chlor-3-pyridinol und 2-Amino-5-brom-3--pyridinol, ebenso die entsprechenden in 4-Position durch Alkyl oder Aryl substituierten Pyridine. Eine Beschreibung der Zugangswege zu diesen Verbindungen findet sich bei Mattern, Helv. Chim. Acta 60 (1977) Seiten 2062-2070. Weitere Literatur findet sich im Kapitel Pyridinols and Pyridones von Band 14 der Reihe Chemistry of Heterocyclic compounds; Pyridine and its Derivatives, Supplement Pt. 3, Seite 597 ff.

*Farbstoff 1*

39,1 g 3-Amino-4-hydroxy-5-nitro-benzolsulfonsäureamidhydrochlorid werden in der Mischung aus 200 ml Wasser und 22 ml konzentrierter Salzsäure verrührt und bei 0°-5°C mit der Lösung von 10,3 g Natriumnitrit in 20 ml Wasser diazotiert. Nach Zerstörung eines geringen Überschusses an salpetriger Säure mit Amidosulfonsäure gibt man die Suspension der gelben Diazoniumverbindung zu einer Lösung von 27,5 g 2-Amino-3-hydroxy-5-brompyridin in 200 ml Dimethylformamid und stellt mit 10%iger Natronlauge einen pH-Wert von etwa 10 ein. Nach beendeter Kupplung wird mit verdünnter Salzsäure oder mit Essigsäure auf pH 6-7 gestellt und der Farbstoff abfiltriert. Nach dem gründlichen Waschen mit Wasser erhält man nach Trocknung 53-57 g Farbstoff 1 ($\lambda_{max}$ = 568 nm, gemessen in Methanol).

*Farbstoff 2*

0,01 ml = 4,33 g Farbstoff 1 werden in 50 ml Dimethylformamid (DMF) verrührt und mit 0,01 mol = 1,38 g gepulvertem Kaliumcarbonat sowie 0,01 ml = 1,1 g Thiophenol versetzt. Nach Erwärmung auf etwa 40°C ist der Austausch des Bromatoms gegen den Phenylthiorest innerhalb von etwa 10 min beendet. Das Ende der Reaktion kann gut im Dünnschichtchromatogramm festgestellt werden. Durch Zugabe von 100 ml Wasser sowie 50 ml 5%iger Kochsalzlösung wird das Umsetzungsprodukt ausgefüllt, abfiltriert und mit Wasser salzfrei gewaschen. Man erhält nach dem Trocknen 4,1 g Farbstoff 2 ($\lambda_{max}$ = 528 nm, gemessen in Methanol).

*Farbstoff 5*

0,01 mol Farbstoff 1 werden wie bei Farbstoff 2 beschrieben in DMF-Kaliumcarbonat mit 0,01 mol = 1,24 g Benzylmercaptan zur Umsetzung gebracht. Der Austausch des Bromatoms gegen die Benzylthiorest erfolgt bereits nach 1 stündigem Rühren bei Raumtemperatur. Das Umsetzungsprodukt wird mit 5%iger Kochsalzlösung ausgefällt und abfiltriert. Nach dem Trocknen erhält man 4,5 g Farbstoff 5 ($\lambda_{max}$ = 590 nm, gemessen in Methanol).

*Farbstoff 4*

Zu der Lösung von 0,01 mol Farbstoff 1 in 50 ml DMF gibt man 0,013 mol = 1,3 g Methansulfinsaures Natrium in Form einer etwa 50%igen wässrigen Lösung und lässt bei Raumtemperatur rühren. Der Austausch des Bromatoms wird im Dünnschichtchromatogramm verfolgt, er ist nach ca. 1 h beendet. Die Isolierung des Umsetzungsproduktes erfolgt wie bei Farbstoff 5. ($\lambda_{max}$ = 588 nm, gemessen in Methanol).

*Farbstoff 7*

0,01 mol Farbstoff 1, 50 ml DMF und 0,015 mol = 2,46 g Benzolsulfinsaures Natrium in Form einer 70%igen wässrigen Paste werden 2 h bei Raumtemperatur verrührt. Nach Aussage des Dünnschichtchromatogramms ist die Umsetzung dann beendet. Die Isolierung des Farbstoffs erfolgt wie bei Farbstoff 5. ($\lambda_{max}$ = 558 nm; gemessen in Propanol/Wasser 1:1).

*Farbstoff 8*

0,04 mol = 17,32 g Farbstoff 1, 0,056 mol = 7,48 g 3-Amino-6-methoxy-benzolsulfinsäure, 0,056 mol = 7,73 g gepulvertes Kaliumcarbonat, 200 ml DMF und 5,6 ml Wasser werden 3 h bei 40°C verrührt. Nach Auswertung des Dünnschichtchromatogramms ist dann die Umsetzung beendet. Das Reaktionsgemisch wird mit verdünnter Essigsäure auf pH 5-6 gestellt und mit 250 ml Wasser versetzt. Das ausgefällte Umsetzungsprodukt wird abfiltriert und mit Wasser salzfrei gewaschen. Nach dem Trocknen erhält man 20 g Farbstoff 8. ($\lambda_{max}$ = 510 nm, gemessen in Methanol).

*Farbstoff 11 b* ($R^5$ = $CAR^1$)

Verwendet man anstelle des zur Herstellung von Farbstoff 2 eingesetzten Thiophenols zur Umsetzung mit dem Farbstoff 1 0,01 mol = 1,25 g 4-Aminothiophenol, so erhält man als Umsetzungsprodukt 4,6 g Farbstoff der Konstitution

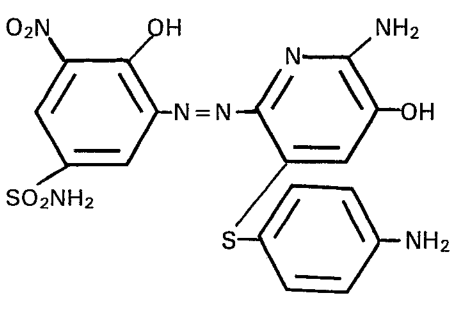

0,01 mol = 4,77 g dieses Farbstoffs werden in 100 ml absolutem Pyridin verrührt und im Verlaufe von 45 min mit 0,011 mol = 6,74 g CARRIER SULFOCHLORID versetzt. Es wird bei Raumtemperatur gerührt und die Umsetzung dünnschichtchromatographisch verfolgt. Nach etwa 4 h ist die Umsetzung beendet. Mit 5%iger Kochsalzlösung wird das Reaktionsprodukt ausgefällt, abfiltriert, mit Wasser wiederholt gewaschen und dann getrocknet. Man erhält 9 g Farbstoff 11 b (= Farbabspalter 1 =). ($\lambda_{max}$ = 412 nm, gemessen in Methanol).

Das als Zwischenprodukt verwendete CARRIER SULFOCHLORID der folgenden Formel

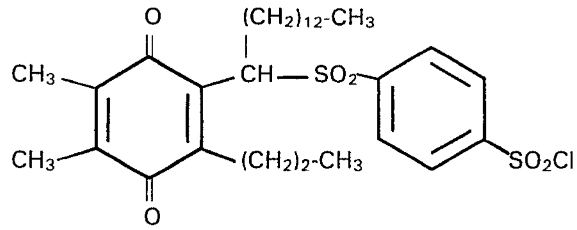

wird wie folgt hergestellt:

| | | |
|---|---|---|
| 20 | g | 2,3-Dimethyl-5-propyl-6-[-(4-aminobenzol-sulfonyl)-tetradecyl]-benzochinon-1,4 werden in |
| 100 | ml | Eisessig nach Zugabe von |
| 10 | ml | konzentrierter Salzsäure bei 15°C mit |
| 2,7 | g | Natriumnitrit diazotiert. Man behandelt mit |
| 0,5 | g | Amidosulfonsäure und trägt bei 10°C in eine Lösung von |
| 35 | ml | flüssigem $SO_2$ und |
| 1,5 | g | Kupfer-II-chlorid in |
| 100 | ml | Eisessig ein. Man erwärmt auf 20°C und rührt 2 h nach. Der mit |
| 100 | ml | Wasser ausgefällte Feststoff wird abgesaugt, neutral gewaschen, getrocknet und aus Ethylacetat/Hexan umkristallisiert. Ausbeute 20 g. |

*Farbstoff 12* ($R^5$ = $CAR^1$)

0,01 mol = 5,39 g Farbstoff 8, 1,38 g gepulvertes Kaliumcarbonat und 100 ml trockenes Dimethylformamid werden verrührt und im Verlauf von 45-60 min mit 0,011 = 6,7 g CARRIER SULFOCHLORID portionsweise versetzt. Die Aufarbeitung erfolgt nach 4stündigem Rühren bei Raumtemperatur wie bei Farbstoff 11 b. Ausbeute 11 g Farbstoff 12 b (Farbabspalter). ($\lambda_{max}$ = 412 nm; gemessen in Methanol).

*Farbstoff 16*

0,01 mol Farbstoff 1, 0,011 mol = 1,5 g gepulvertes Kaliumcarbonat, 0,011 mol = 1,22 g 2-Mercaptopyrimidin und 50 ml trockenes DMF werden 4 h bei Raumtemperatur verrührt. Anschliessend wird mit verdünnter Essigsäure auf pH 5-6 gestellt und mit 200 ml Wasser versetzt. Das ausgeschiedene Reaktionsprodukt wird abfiltriert, mit Wasser gewaschen und getrocknet. Man erhält 3,7 g Farbstoff 16. ($\lambda_{max}$ = 540-570 nm, gemessen in Methanol).

*Farbstoff 35*

Verwendet man anstelle von 2-Mercaptopyrimidin 0,011 mol = 1,4 g 2-Mercapto-4-aminopyrimidin und verfährt ansonsten wie bei der Herstellung von Farbstoff 16 so erhält man 3,9 g Farbstoff 35.

*Farbstoff 36*

a) Diazokomponente (Amin 25)

276,5 g 2-Methyl-4-nitrobenzoxazol-6-sulfochlorid werden bei 80 °C portionsweise in eine Mischung aus 1000 ml Ethylendionin und 300 ml Wasser eingerührt. Die Temperatur wurde anschliessend noch 1 h gehalten. Am anderen Tag wird die dunkelrote Lösung im Vakuum eingeengt und der Rückstand wird mit 500 ml 20%iger NaOH 4 h bei 100 °C gerührt. Nach dem Neutralisieren mit konzentrierter Salzsäure (pH 6) wird der ausgefallene rotgelbe Niederschlag abgesaugt und aus konzentrierter Salzsäure umgefällt. Fp. 210 °C.

In analoger Weise können ausgehend von 1,3-Diaminopropan, 1,4-Diaminobutan oder Piperazin die entsprechenden Diazokomponenten hergestellt werden. Die erhaltenen Diazokomponenten können zu den entsprechenden Br-Farbstoffen umgesetzt werden wie nachstehend am Beispiel des Amin 25 erläutert.

b) Br-Farbstoff

8,0 g Amin 25 werden in 100 ml Wasser und 5 ml 40%iger Natronlauge gelöst. Nach Zugabe von 2,0 g NaOH giesst man die erhaltene dunkelrote Lösung unter Rühren auf eine Mischung von 100 g Eis und 65 ml konzentrierter Salzsäure.

Nach 60 min wird mit Sodalösung der pH-Wert 2 eingestellt und das Rühren wird 2 h fortgesetzt. In der Lösung ist kein Nitrit mehr festzustellen.

In der Diazoniumsalzlösung werden 5,48 g 2--Amino-3-hydroxy-5-brompyridin, gelöst in 50 ml DMF und 50 ml Wasser zugefügt, worauf mit Sodalösung innerhalb 1 h der pH-Wert 7 eingestellt wurde. Man lässt über Nacht auskuppeln und filtriert den Br-Farbstoff ab.

c) Farbstoff 36

28,6 g Br-Farbstoff werden in 1000 ml DMF gelöst und nach Zugabe von 15 g $K_2CO_3$ bei Raumtemperatur mit 7,8 ml 4-Methoxythiophenol umgesetzt. Nach dem rasch vonstatten gehenden Br-Austausch (kontrolliert durch Dünnschichtchromatographie) werden bei pH 7 27,4 g Farbstoff 36 isoliert.

*Farbabspalter 9*

5,3 g Farbstoff 36 werden in 50 ml DMF gelöst und mit 1,8 ml Triethylamin versetzt. Innerhalb von 15 min werden bei Raumtemperatur 6,1 g CARRIER SULFOCHLORID zugefügt. Nach dem dünnschichtchromatografisch bestimmten Reaktionsende gibt man den Ansatz auf Eis/Salzsäure und isoliert den Farbstoff durch Absaugen. Nach Reinigung durch Chromatografie an Kieselgel mit $CH_2Cl_2$/Methanol 10:1 als Laufmittel werden 5,8 g Farbabspalter 9 erhalten.

*Farbabspalter 12*

9,52 g des bei Farbstoff 36 beschriebenen Br-Farbstoffes werden in 100 ml DMF gelöst und portionsweise mit 12,2 g CARRIER SULFOCHLORID versetzt. Anschliessend werden 3,0 ml Triethylamin so langsam zugetropft, dass die blaue Farbe eben bestehen bleibt. Nach 60 min wird der Ansatz auf Eis/Salzsäure gegeben und abgesaugt. 10,5 g des so erhaltenen Farbstoffes werden, gelöst in 50 ml DMF mit 1,8 g 4-Methoxybenzolsulfinsäure versetzt. Nun werden 1,4 g $K_2CO_3$ zugefügt. Nach erfolgter Umsetzung und Aufarbeitung werden 7,8 g Farbabspalter 12 erhalten.

Die erfindungsgemässen Farbabspalter werden beim Farbdiffusionsübertragungsverfahren in Zuordnung zu einer lichtempfindlichen Silberhalogenidemulsionsschicht einem farbfotografischen Aufzeichnungsmaterial einverleibt. Bei monochromatischen Verfahren erhält ein solches Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäss mindestens einer dieser Schichten ein Farbabspalter gemäss Formel IV zugeordnet ist. Die Farbabspalter liefern bei der Entwicklung diffusionsfähige Farbstoffe, die nach Diffusion in eine Bildempfangsschicht mit Nickelionen zu blaugrünen Bildfarbstoffen komplexiert werden. Die Farbabspalter der Erfindung sind daher bevorzugt einer rotempfindlichen Silberhalogenidemulsionsschicht zugeordnet.

Unter «Zuordnung» und «zugeordnet» wird verstanden, dass die gegenseitige Anordnung von lichtempfindlicher Silberhalogenidemulsionsschicht und Farbabspalter von solcher Art ist, dass bei der Entwicklung eine Wechselwirkung zwischen ihnen möglich ist, die eine Freisetzung des diffusionsfähigen durch Nickelionen komplexierbaren Monoazofarbstoffes als Funktion der Entwicklung der Silberhalogenidemulsionsschicht zulässt. Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemässen Farbabspaltern um reduzierbare, reduktiv spaltbare Verbindungen handelt, die zweckmässig gemeinsam mit ED-Verbindungen (oder deren Vorläufern, z.B. gemäss DE-A-30 06 268) verwendet werden, ist unter Zuordnung zu verstehen, dass die gegenseitige Anordnung von Silberhalogenidemulsion, ED-Verbindung bzw. ED-Vorläuferverbindung und Farbabspalter von solcher Art ist, dass eine Wechselwirkung zwischen ihnen möglich ist, die eine bildmässige Übereinstimmung zwischen dem gebildeten Silberbild und dem Verbrauch an ED-Verbindung einerseits sowie zwischen der nicht verbrauchten ED-Verbindung und dem Farbabspalter andererseits zulässt, so dass in Übereinstimmung mit dem nicht entwickelten Silberhalogenid eine bildweise Verteilung von diffusionsfähigem Farbstoff erzeugt wird.

Obwohl für die Einarbeitung der erfindungsgemässen Farbabspalter die verschiedensten Methoden in Frage kommen, hat es sich als günstig erwiesen, die Farbabspalter der vorliegenden Erfindung in Form von Emulgaten unter Verwendung von sogenannten

Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, dass Farbabspalter und ED-Verbindungen in Form eines gemeinsamen Emulgates in besonders engen funktionellen Kontakt gebracht werden können. Geeignete Ölbildner sind beispielsweise beschrieben in US-A-2322027, DE-A-1772192, DE-A-2042659 und DE-A-2049689. Die optimalen Mengen des einzuarbeitenden Farbabspalters und gegebenenfalls der ED-Verbindung können durch einfache routinemässige Tests ermittelt werden. Der Farbabspalter der vorliegenden Erfindung wird beispielsweise in Mengen von 0,05-0,2 mol und die ED-Verbindung, falls vorhanden, in Mengen von 0,1-0,6 mol pro mol Silberhalogenid verwendet.

Die Entwicklung des bildmässig belichteten erfindungsgemässen farbfotografischen Aufzeichnungsmaterials wird durch Behandlung mit einer wässrigalkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemässen farbfotografischen Aufzeichnungsmaterials enthalten sein. Bei der Entwicklung werden aus den Farbabspaltern bildmässig diffusionsfähige Farbstoffe freigesetzt und auf eine Bildempfangsschicht übertragen, die entweder integraler Bestandteil des erfindungsgemässen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A-3271147 und US-A-3271148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-2315304, DE-A-2631521 oder DE-A-2941818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen quaternären Basen, wie etwa von 2-Methyl-4-Vinylpyridin, 4-Vinylpyridin, 1-Vinylimidazol, wie beispielsweise beschrieben in US-A-2484430. Weitere brauchbare beizende Bindemittel sind beispielsweise Guanylhydrazonderivate von Alkylvinylketonpolymerisaten, wie beispielsweise beschrieben in der US-A-2882156, oder Guanylhydrazonderivate von Acylstyrol-polymerisaten, wie beispielsweise beschrieben in DE-A-2009498. Im allgemeinen wird man jedoch den zuletzt genannten beizenden Bindemitteln andere Bindemittel, z.B. Gelatine, zusetzen.

Darüber hinaus kann im vorliegenden Fall die Bildempfangsschicht oder eine hierzu benachbarte Schicht Schwermetallionen, insbesondere Nickelionen enthalten, die mit den eindiffundierenden Monoazofarbstoffen der Erfindung die entsprechenden Azofarbstoff-Metall-Komplexe bilden mit den erwähnten vorteilhaften Eigenschaften hinsichtlich Absorption und Stabilität. Die Nickelionen können in der Bildempfangsschicht in komplex gebundener Form vorliegen, z.B. gebunden an bestimmte Polymerisate wie etwa beschrieben in Research Disclosure 18534 (Sept. 1979) oder in DE-A-3002287 und DE-A-3105777. Es ist aber auch möglich die Azofarbstoff-Metall-Komplexe nach erfolgter Diffusion in der Bildempfangsschicht dadurch zu erzeugen, dass die Bildempfangsschicht mit der darin entstandenen bildmässigen Verteilung an erfindungsgemässen Farbstoffen mit einer Lösung eines Salzes eines der genannten Schwermetalle behandelt wird. Auch die bei der Entwicklung in Zuordnung zu den ursprünglich lichtempfindlichen Schichten bildmässig (als Negativ zu dem Übertragsbild) zurückbleibenden Farbabspalter können durch Behandlung mit Nickelionen in die entsprechenden Azofarbstoff-Metall-Komplexe überführt werden («retained image»). In jedem Fall besteht das mit dem erfindungsgemässen farbfotografischen Material erzeugte Farbbild aus einer bildmässigen Verteilung von Nickelkomplexen, der erfindungsgemässen Farbabspalter oder der daraus freigesetzten Azofarbstoffe sowie gegebenenfalls weiterer Farbstoffe, die im letzteren Fall in der Bildempfangsschicht mittels der darin enthaltenen Beizmittel festgelegt sind.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muss entweder der Schichtträger transparent sein, so dass das erzeugte Farbübertragsbild durch ihn hindurch betrachtet werden kann, oder das lichtempfindliche Element muss mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmässigerweise durch den transparenten Schichtträger vorgenommen wird.

*Beispiel 1*

Erfindungsgemässe Farbstoffe werden hinsichtlich der spektralen Daten und der Lichtechtheit mit Farbstoffen des Standes der Technik verglichen, und zwar werden in der folgenden Tabelle jeweils die Absorptionsmaximumwellenlänge ($\lambda_{max}$) und die auf die Hauptabsorption bezogene prozentuale gelbe Nebendichte ($ND_{gb}$) und purpurne Nebendichte ($ND_{pp}$) der Nickelkomplexe angegeben, sowie die prozentuale Farbabdichteabnahme bei Bestrahlung im Xenotestgerät.

*Bildempfangsblatt*

Ein Bildempfangsblatt wurde hergestellt, indem auf einen beidseitig mit Polyethylen beschichteten und mit einer Haftschicht versehenen Papierträger folgende Schichten aufgetragen wurden. Die Angaben beziehen sich auf 1 $m^2$.

1. Eine Beizschicht mit 6 g eines Polyurethans gemäss Beispiel 3 aus DE-A-2631521 und 5 g Gelatine.

2. Eine Härtungsschicht mit 0,1 g Gelatine und 0,15 g Soforthärtungsmittel

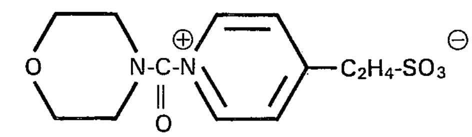

Je 1 Streifen des erhaltenen Bildempfangsmaterials wurde in eine 0,03-molare mit 2% Natriumhydroxid alkalisch eingestellte Farbstofflösung eingetaucht und zu einer Dichte von 1,2-1,5 (gemessen am Reflektionsdensitometer RD 514/Macbeth hinter Rotfilter) eingefärbt.

Es wurden die in der folgenden Tabelle aufgeführten Farbstoffe verwendet.

Nach beendeter Tauchbehandlung wurden die Proben mit demineralisiertem Wasser gespült und durch Eintauchen in 2%ige Nickelacetatlösung metallisiert.

Alle Proben wurden danach unter fliessendem Wasser gespült, mit einer 2%igen Bernsteinsäurepufferlösung (pH 6) nachbehandelt und getrocknet.

Die verschiedenen Farbstreifen wurden halbseitig abgedeckt und mit Xenonlicht bestrahlt ($4{,}8 \cdot 10^6$ lx·h). Die prozentuale Dichtabnahme $\frac{\Delta D}{D_o}$ ist der folgenden Tabelle zu entnehmen.

*Tabelle*

| Farbstoff | $\lambda_{max}$(nm) | $ND_{gb}$(%) | $ND_{pp}$(%) | $\frac{\Delta D}{D_o}$ % |
|---|---|---|---|---|
| 2 | 660 | 17 | 30 | — 13 |
| 3 | 665 | 19 | 31 | — 11 |
| 4 | 656 | 14 | 30 | — 16 |
| 5 | 668 | 18 | 35 | ± 0 |
| 6 | 665 | 19 | 35 | — 14 |
| 7 | 660 | 16 | 31 | — 13 |
| 8 | 655 | 23 | 36 | — 12 |
| 9 | 665 | 27 | 37 | — 6 |
| 14 | 668 | 21 | 34 | — 7 |
| 16 | 655 | 20 | 35 | — 10 |
| 17 | 666 | 19 | 31 | — 14 |
| 20 | 664 | 20 | 30 | — 4 |
| 31 | 538 | 19 | 33 | — 10 |
| 32 | 662 | 20 | 31 | — 11 |
| A | 631 | 24 | 48 | — 11 |
| B | 650 | 20 | 38 | — 30 |
| C | 648 | 23 | 38 | — 40 |
| D | 668 | 35 | 38 | — 38 |
| E | 644 | 19 | 31 | — 38 |

Nicht erfindungsgemässe Vergleichsfarbstoffe

Farbstoff A ( = DE-A-31 07 540, Farbstoff 2)

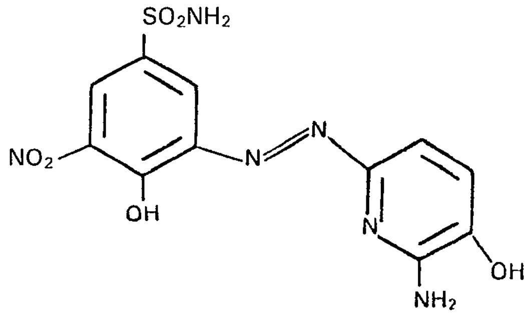

Farbstoff B ( = Farbstoff 1)

Farbstoff C ( = DE-A-27 40 719, Farbstoff aus Farbabspalter 26)

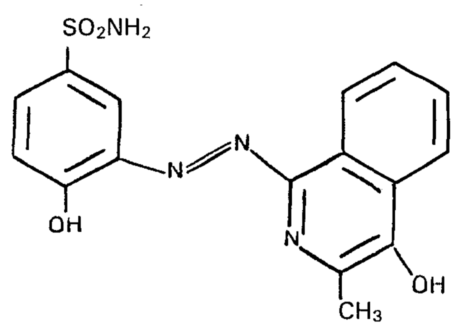

Farbstoff D ( = DE-A-31 07 540, Farbstoff D)

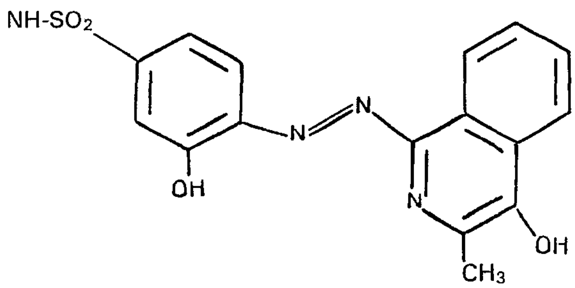

Farbstoff E ( = US 4 346 161)

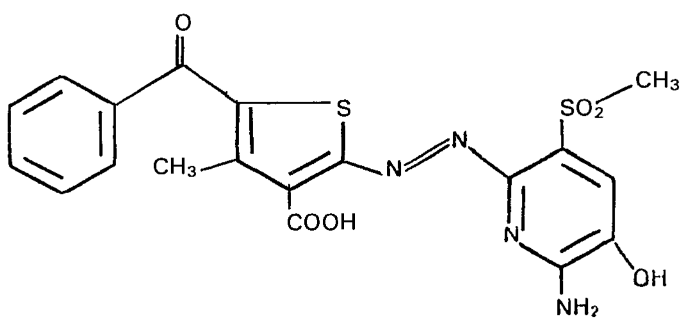

Die Tabelle zeigt deutlich die Überlegenheit der erfindungsgemässen Farbstoffe in Bezug auf die Blaugrün-Nuance der Nickelkomplexe und das ausgezeichnete, den Aminopyridinolazophenolen der DE-A-31 07 540 gleichwertige, in Einzelfällen sogar überlegene Lichtechtheitsniveau.

*Beispiel 2*

*Lichtempfindliche Element 1*
(nicht erfindungsgemäss)

Auf einen beidseitig mit Polyethylen beschichteten Papierträger wurden nacheinander folgende Schichten aufgetragen. Alle Angaben beziehen sich auf 1 $m^3$.

1. Eine rotsensibilisierte Silberbromidjodidemulsionsschicht (Silberauftrag entsprechend 0,97 g $AgNO_3$) mit 0,35 g des nicht erfindungsgemässen Farbstoffes F (Farbabspalter 1 aus DE-A-31 07 540), 0,22 g ED-Verbindung 6 (Verbindung 4 der DE-A-30 06 268), 0,55 g Palmitinsäurediethylamid und 1,15 g Gelatine.

2. Eine Schutzschicht mit 0,6 g Monoacetylierungsprodukt von 4-Methyl-4-hydroxymethylphenidon und 0,6 g Gelatine.

3. Eine Härtungsschicht mit 0,1 g Gelatine und 0,12 g des in Beispiel 1 angegebenen Soforthärtungsmittels.

*Lichtempfindliche Elemente 2 bis 4*
(erfindungsgemäss)

Die lichtempfindlichen Elemente 2 bis 4 unterscheiden sich von Element 1 durch Ersatz des Farbstoffes F durch:
Lichtempf. Element 2: 0,42 g Farbstoff 11
Lichtempf. Element 3: 0,44 g Farbstoff 24
Lichtempf. Element 4: 0,45 g Farbstoff 12

Je ein 30 x 35 cm grosser Streifen der lichtempfindlichen Elemente 1 bis 4 wurden bildmässig durch einen Vorlaufkeil belichtet, gemeinsam mit je einem gleich grossen Streifen von Bildempfangsblatt gemäss Beispiel 1 mit einer Behandlungslösung der nachfolgend angegebenen Zusammensetzung getränkt und schichtseitig zusammengepresst:

| | | |
|---|---|---|
| Behandlungslösung: | 912 g | Wasser |
| | 40 g | Kaliumhydroxid |
| | 3 g | Kaliumbromid |
| | 25 g | 2,2-Methylpropylpropan-1,3-diol |
| | 20 g | 1,4-Cyclohexan-1,4--dimethanol |

Nach einer Kontaktzeit von 2 min wurden die Blätter voneinander getrennt und das jeweilige Bildempfangsblatt nach Abspülen mit demineralisiertem Wasser 2 min in eine 2%ige wässrige Lösung von Nickelacetat eingetaucht. Anschliessend wurden die Bildempfangsblätter 5 min gewässert und getrocknet.

Die erhaltenen Daten sind in der nachfolgenden Tabelle zusammengefasst:

*Tabelle*

| Lichtempf. Element | Farbabspalter (Farbstoff) | λ max (nm) | $D_{min}$ | $D_{max}$ (R) | $D_{max}$ (G) | $D_{max}$ (B) | $\frac{\Delta D}{D_o}$ |
|---|---|---|---|---|---|---|---|
| 1 (nicht erfindungsgemäss) | F (DE-OS 31 07 540) | 640 | 0,14 | 1,80 | 0,70 (38%) | 0,45 (25%) | — 17% |
| 2 (erfindungsgemäss) | 11 | 660 | 0,19 | 1,90 | 0,60 (31%) | 0,42 (22%) | — 20% |
| 3 (erfindungsgemäss) | 24 | 665 | 0,16 | 1,60 | 0,51 (32%) | 0,38 (24%) | — 25% |
| 4 (erfindungsgemäss) | 12 | 655 | 0,14 | 1,65 | 0,59 (36%) | 0,38 (23%) | — 22% |

In der Tabelle bedeuten:

$D_{max}$ (R) die Maximaldichte hinter Rotfilter (Macbeth RD 514)
$D_{max}$ (G) die Maximaldichte hinter Grünfilter
$D_{max}$ (B) die Maximaldichte hinter Blaufilter

Die Relation $D_{max}$ (G) / $D_{max}$ (R) ergibt die Nebendichte, angegeben in % der Dichte hinter Rotfilter

$\frac{\Delta D}{D_o}$ bedeutet den prozentialen Dichterückgang nach Belichtung über 72 Stunden im Xenotestgerät, gemessen bei Dichte 1,0.

Aus den Ergebnissen ist klar zu ersehen, dass die Ni-Komplexe der erfindungsgemässen Farbstoffe ohne störenden Verlust an Lichtechtheit klarere bg-Nuancen ergeben als der Ni-Komplex des Standes der Technik. Die aus dem Verhältnis $D_{max}$ (G) / $D_{max}$ (R) bzw. $D_{max}$ (B) / $D_{max}$ (R) zu errechnenden gelb- bzw. purpur-Nebendichten liegen in allen 3 Fällen niedriger als beim Ni-Komplex des Standes der Technik.

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger durch Metallionen komplexierbarer 6-Arylazo-2-amino-3-pyridinolfarbstoff freigesetzt wird, dadurch gekennzeichnet, dass der 6-Arylazo-2-amino-3-pyridinolfarbstoff der folgenden Formel I entspricht:

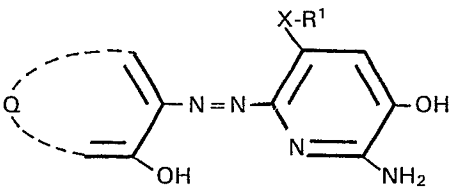
I

worin bedeuten

- Q den zur Vervollständigung einer gegebenenfalls substituierten Phenyl- oder Naphthylgruppe erforderlichen Rest;
- X -S-, $-SO_2-$, $-SO_2-NR^o-$ oder $-SO_2-O-$, wobei im Zweifelsfall die Sulfonylgruppe an den Pyridinolring gebunden ist;
- $R^o$ Wasserstoff oder Alkyl;
- $R^1$ einen aliphatischen, araliphatischen oder carbocyclisch oder heterocyclisch aromatischen Rest mit der Massgabe dass, wenn X die Gruppe $-SO_2-O-$ bedeutet, $R^1$ nur Aryl sein kann, oder falls X die Gruppe $-SO_2-NR^o-$ bedeutet, auch Wasserstoff.

2. Aufzeichnungsmaterial nach Anspruch 1, dadurch gekennzeichnet, dass der 6-Arylazo-2-amino-3-pyridinolfarbstoff der folgenden Formel II entspricht:

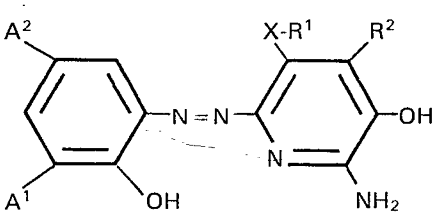
II

worin bedeuten

- X -S-, $-SO_2-$, oder $SO_2-NR^o-$ oder $-SO_2-O-$, wobei im Zweifelsfall die Sulfonylgruppe an den Pyridinolring gebunden ist;
- $R^o$ Wasserstoff oder Alkyl;
- $R^1$ einen aliphatischen, araliphatischen oder carbocyclisch oder heterocyclisch aromatischen Rest mit der Massgabe dass, wenn X die Gruppe $-SO_2-O-$ bedeutet, $R^1$ nur Aryl sein kann, oder falls X die Gruppe $-SO_2-NR^o-$ bedeutet, auch Wasserstoff;
- $R^2$ Wasserstoff, Halogen oder einen Substituenten mit Elektronenakzeptoreigenschaften;
- $A^1$ und $A^2$ Substituenten mit Elektronenakzeptoreigenschaften.

3. Aufzeichnungsmaterial nach Anspruch 2, dadurch gekennzeichnet, dass in Formel II $A^1$ für einen vergleichsweise starken Elektronenakzeptor und $A^2$ für einen vergleichsweise schwächeren Elektronenakzeptor steht.

4. Aufzeichnungsmaterial nach einem der Ansprüche 2 und 3, dadurch gekennzeichnet, dass in Formel II $A^1$ für $-NO_2$, -CN oder $-SO_2-R^3$ und $A^2$ für Halogen, $-SO_2-R^4$, $-CF_3$ oder COOH steht, wobei $R^3$ und $R^4$ -OH, Amino, Alkyl oder Aryl bedeuten.

5. Fotografisch hergestelltes Farbbild, bestehend aus einer auf einem Schichtträger angeordneten bildmässigen Verteilung eines blaugrünen Farbstoffes, dadurch gekennzeichnet, dass der blaugrüne Farbstoff ein Nickelkomplex eines Monoazofarbstoffes der Formel I oder eines Farbabspalters der Formel IV ist.

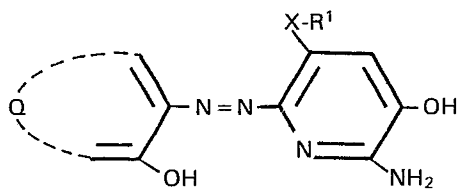
I

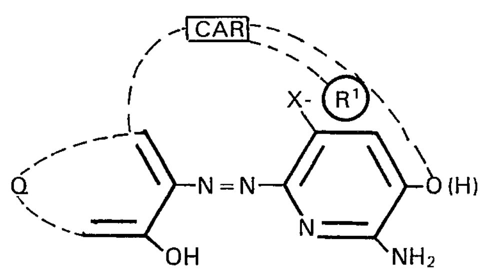
IV

worin bedeuten

- Q den zur Vervollständigung einer gegebenenfalls substituierten Phenyl- oder Naphthylgruppe erforderlichen Rest;
- X -S-, $-SO_2-$, $-SO_2-NR^o-$ oder $-SO_2-O-$, wobei im Zweifelsfall die Sulfonylgruppe an den Pyridinolring gebunden ist;
- $R^o$ Wasserstoff oder Alkyl;
- $R^1$ einen aliphatischen, araliphatischen oder carbocyclisch oder heterocyclisch aromatischen Rest mit der Massgabe dass, wenn X die Gruppe $-SO_2-O-$ bedeutet, $R^1$ nur Aryl sein kann, oder falls X die Gruppe $-SO_2-NR^o$ bedeutet, auch Wasserstoff;
- CAR einen mindestens einen Ballastrest enthaltenden redoxaktiven Trägerrest,

und wobei die gestrichelten Linien mögliche Verknüpfungsstellen kennzeichnen.

6. Farbbild nach Anspruch 5, dadurch gekennzeichnet, dass der blaugrüne Farbstoff ein Nickelkomplex eines Monoazofarbstoffes der Formel II oder eines Farbabspalters der Formel V ist

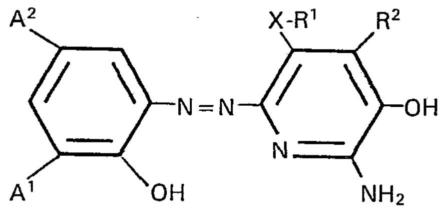

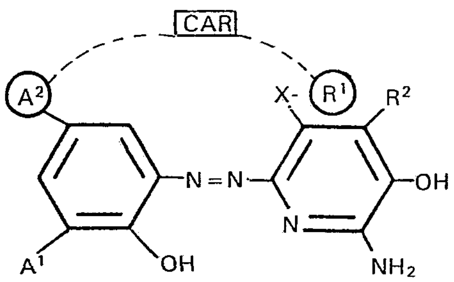

worin bedeuten

X $-S-$, $-SO_2-$, $-SO_2-NR^o-$ oder $-SO_2-O-$, wobei im Zweifelsfall die Sulfonylgruppe an den Pyridinolring gebunden ist;

$R^o$ Wasserstoff oder Alkyl;

$R^1$ einen aliphatischen, araliphatischen oder carbocyclisch oder heterocyclisch aromatischen Rest mit der Massgabe dass, wenn X die Gruppe $-SO_2-O-$ bedeutet, $R^1$ nur Aryl sein kann, oder falls X die Gruppe $-SO_2-NR^o-$ bedeutet, auch Wasserstoff;

$R^2$ Wasserstoff, Halogen oder einen Substituenten mit Elektronenakzeptoreigenschaften;

$A^1$ und $A^2$ Substituenten mit Elektronenakzeptoreigenschaften;

CAR einen mindestens einen Ballastrest enthaltenden redoxaktiven Trägerrest,

und wobei die gestrichelten Linien mögliche Verknüpfungsstellen bedeuten.

7. Farbbild nach Anspruch 6, dadurch gekennzeichnet, dass in den Formeln II und V $A^1$ für einen vergleichsweise starken Elektronenakzeptor und $A^2$ für einen vergleichsweise schwächeren Elektronenakzeptor steht.

**Claims**

1. Colour photographic recording material for the production of coloured images by the dye diffusion transfer process, which contains, associated with at least one light-sensitive silver halide emulsion layer, a non-diffusing colour-providing compound from which a diffusible 6-arylazo-2-amino-3-pyridinol dye capable of complex formation with metal ions is released as a function of the development of the silver halide emulsion layer under conditions of alkaline development, characterised in that the 6-arylazo-2-amino-3-pyridinol dye corresponds to the following formula I:

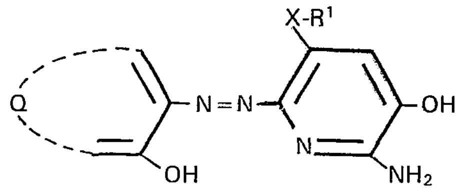

I

wherein

Q denotes the group required for completing an optionally substituted phenyl or naphthyl group;

X denotes $-S-$, $-SO_2-$, $-SO_2-NR^o-$ or $-SO_2-O-$, where in case of doubt the sulphonyl group is attached to the pyridinol ring;

$R^o$ denotes hydrogen or alkyl; and

$R^1$ denotes an aliphatic, araliphatic or carbocyclically or heterocyclically aromatic group, with the proviso that, when X denotes the group $-SO_2-O-$, $R^1$ may only be aryl, or, if X denotes the group $-SO_2-NR^o-$, $R^1$ may also be hydrogen.

2. Recording material according to Claim 1, characterised in that the 6-arylazo-2-amino-3-pyridinol dye corresponds to the following formula II:

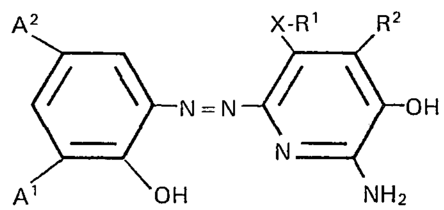

II

wherein

X denotes $-S-$, $-SO_2-$ or $SO_2-NR^o-$ or $-SO_2-O-$, where in case of doubt the sulphonyl group is attached to the pyridinol ring;

$R^o$ denotes hydrogen or alkyl;

$R^1$ denotes an aliphatic, araliphatic or carbocyclically or heterocyclically aromatic group, with the proviso that when X denotes the group $-SO_2-O-$, $R^1$ may only be aryl, or, if X denotes the group $-SO_2-NR^o-$, $R^1$ may also be hydrogen;

$R^2$ denotes hydrogen, halogen or a substituent having electron acceptor properties; and

$A^1$ and $A^2$ denote substituents having electron acceptor properties.

3. Recording material according to Claim 2, characterised in that, in formula II, $A^1$ represents a comparatively strong electron acceptor and $A^2$ a comparatively weaker electron acceptor.

4. Recording material according to one of Claims 2 and 3, characterised in that, in formula II, $A^1$ represents $-NO_2$, $-CN$ or $-SO_2-R^3$ and $A^2$ represents halogen, $-SO_2-R^4$, $-CF_3$ or COOH, $R^3$ and $R^4$ denoting $-OH$, amino, alkyl or aryl.

5. Photographically produced colour image consisting of an imagewise distribution of a cyan dye arranged on a layer support, characterised in that the cyan dye is a nickel complex of a monoazo dye of the formula I or of a dye releaser of the formula IV.

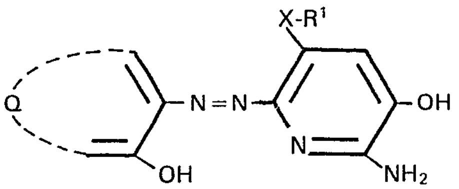

I

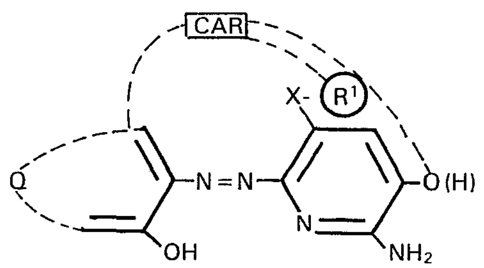

IV

wherein

Q denotes the group required for completing an optionally substituted phenyl or naphthyl group;

X denotes -S-, $-SO_2-$, $-SO_2-NR^o-$ or $-SO_2-O-$, where in case of doubt the sulphonyl group is attached to the pyridinol ring;

$R^o$ denotes hydrogen or alkyl;

$R^1$ denotes an aliphatic, araliphatic or carbocyclically or heterocyclically aromatic group, with the proviso that, when X denotes the group $-SO_2-O-$, $R^1$ may only be aryl, or, if X denotes the group $-SO_2-NR^o$, $R^1$ may also be hydrogen; and

CAR denotes a redox-active carrier group containing at least one ballast group;

and the broken lines indicate possible linkage positions.

6. Colour image according to Claim 5, characterised in that the cyan dye is a nickel complex of a monoazo dye of the formula II or of a dye-releaser of the formula V

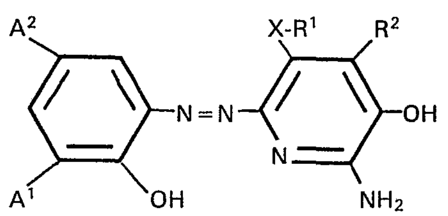

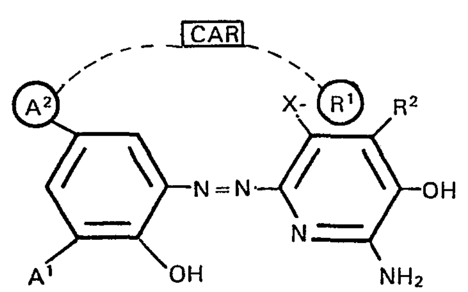

wherein

X denotes -S-, $-SO_2-$, $-SO_2-NR^o-$ or $-SO_2-O-$, where in case of doubt the sulphonyl group is attached to the pyridinol ring;

$R^o$ denotes hydrogen or alkyl;

$R^1$ denotes an aliphatic, araliphatic or carbocyclically or heterocyclically aromatic group, with the proviso that, when X denotes $-SO_2-O-$, $R^1$ may only be aryl, or, if X denotes the group $-SO_2-NR^o-$, $R^1$ may also be hydrogen;

$R^2$ denotes hydrogen, halogen or a substituent having electron acceptor properties;

$A^1$ and $A^2$ denote substituents having electron acceptor properties;

CAR denotes a redox-active carrier group containing at least one ballast group,

and the broken lines indicate possible linkage positions.

7. Colour image according to Claim 6, characterised in that, in the formulae II and V, $A^1$ represents a comparatively strong acceptor and $A^2$ a comparatively weaker electron acceptor.

**Revendications**

1. Matériel d'enregistrement de photographie en couleur pour la production d'images en couleur selon le procédé de transfert des colorants par diffusion, lequel contient, en association avec au moins une couche d'émulsion d'halogénure d'argent sensible à la lumière, un composé colorant non diffusant à partir duquel, dans les conditions du développement alcalin, est mis en liberté en fonction du développement de la couche d'émulsion d'halogénure d'argent un colorant de 6-arylazo-2-amino-3-pyridinol capable de diffuser et qui est complexable par des ions métalliques, caractérisé en ce que le colorant de 6-arylazo-2-amino-3-pyridinol répond à la formule I suivante:

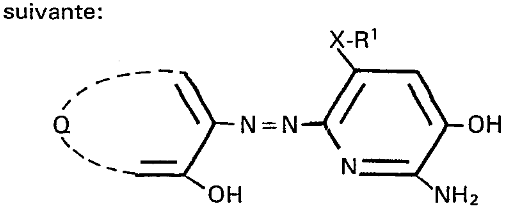

I

dans laquelle

Q signifie le radical nécessaire pour compléter un groupe phényle ou naphtyle éventuellement substitué,

X signifie -S-, $-SO_2-$, $-SO_2-NR^o-$ ou $-SO_2-O-$, dans un cas douteux le groupe sulfonyle étant relié au noyau pyridinol,

$R^o$ est de l'hydrogène ou un alcoyle,

$R^1$ signifie un radical aliphatique, araliphatique ou aromatique carbocyclique ou hétérocyclique, avec comme restriction que lorsque X représente le groupe $SO_2-O-$, $R^1$ ne peut être qu'un aryle, ou qu'au cas où X signifie le groupe $-SO_2-NR^o-$, il peut être aussi de l'hydrogène.

2. Matériel d'enregistrement selon la revendication 1, caractérisé en ce que le colorant 6-arylazo-2-amino-pyridinol correspond à la formule II suivante:

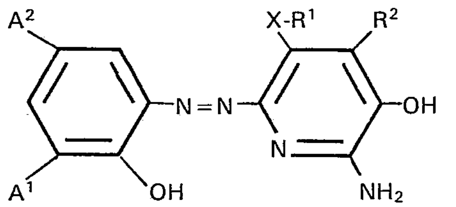

II

dans laquelle

X signifie -S-, $-SO_2-$ ou $SO_2-NR^o-$ ou $-SO_2-O-$, dans un cas douteux le groupe sulfonyle étant relié au noyau pyridinol,

$R^o$ est de l'hydrogène ou un alcoyle,

$R^1$ est un radical aliphatique, araliphatique ou aromatique carbocyclique ou hétérocyclique, avec comme restriction que lorsque X signifie le groupe $-SO_2-O-$, $R^1$ ne peut être qu'un aryle, ou lorsque X signifie le groupe $-SO_2-NR^o-$, il signifie aussi de l'hydrogène,

$R^2$ représente de l'hydrogène, de l'halogène ou un substituant ayant des propriétés d'accepteur d'électrons,

$A^1$ et $A^2$ sont des substituants ayant des propriétés d'accepteur d'électrons.

3. Matériel d'enregistrement selon la revendication 2, caractérisé en ce que dans la formule II $A^1$ représente un accepteur d'électrons comparativement fort et $A^2$ un accepteur d'électrons comparativement plus faible.

4. Matériel d'enregistrement selon l'une des revendications 2 et 3, caractérisé en ce que dans la formule II $A^1$ représente $-NO_2$, -CN ou $-SO_2-R^3$ et $A^2$ de l'halogène, $-SO_2-R^4$, $-CF_3$ ou COOH, $R^3$ et $R^4$ signifiant un -OH, amino, alcoyle ou aryle.

5. Image en couleur produite par photographie, consistant en une distribution sous forme d'image, placée sur un support de couches, d'un colorant bleu-vert, caractérisée en ce que le colorant bleu-vert est un complexe de nickel d'un colorant monoazoïque de formule I ou un dispensateur de colorant de formule IV,

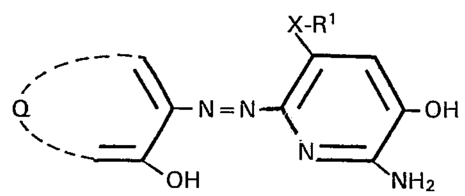

I

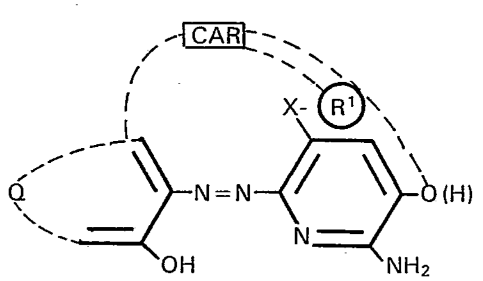

IV

dans lesquelles

Q signifie le radical nécessaire pour compléter un groupe phényle ou naphtyle éventuellement substitué,

X est -S-, $-SO_2-$, $-SO_2-NR^o-$ ou $-SO_2-O-$, dans un cas douteux le groupe sulfonyle étant relié au noyau pyridinol,

$R^o$ est de l'hydrogène ou alcoyle,

$R^1$ représente un radical aliphatique, araliphatique ou aromatique carbocyclique ou hétérocyclique, avec comme restriction que lorsque X signifie le groupe $-SO_2-O-$, $R^1$ ne peut être qu'un aryle, ou qu'au cas où X signifie le groupe $-SO_2-NR^o$, il signifie aussi de l'hydrogène,

CAR signifie un radical de support à activité redox contenant au moins un radical de ballast,

les lignes en traits discontinus caractérisant des endroits de liaison possibles.

6. Image en couleur selon la revendication 5, caractérisée en ce que le colorant bleu-vert est un complexe de nickel d'un colorant monoazoïque de formule II ou d'un dispensateur de colorant de formule V:

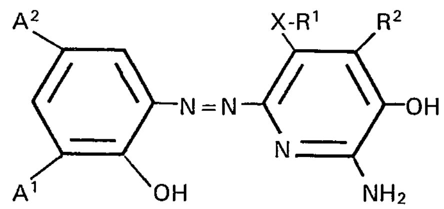

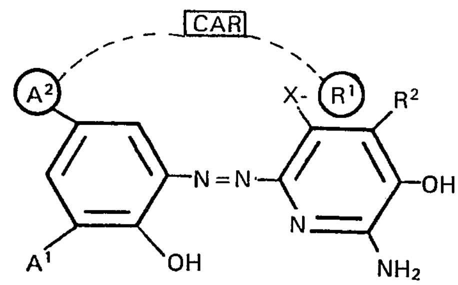

dans lesquelles

X signifie -S-, $-SO_2-$, $-SO_2-NR^o-$ ou $-SO_2-O-$, dans un cas douteux le groupe sulfonyle étant relié au noyau pyridinol,

$R^o$ est de l'hydrogène ou un alcoyle,

$R^1$ est un radical aliphatique, araliphatique ou aromatique carbocyclique ou hétérocyclique, avec comme restriction que lorsque X signifie le groupe $-SO_2-O-$, $R^1$ ne peut être qu'un aryle, ou au cas où X signifie le groupe $-SO_2-NR^o-$, il signifie aussi de l'hydrogène,

$R^2$ est de l'hydrogène, de l'halogène ou un substituant ayant des propriétés d'accepteur d'électrons,

$A^1$ et $A^2$ sont des substituants ayant des propriétés d'accepteur d'électrons

CAR est un radical de support à activité redox contenant au moins un radical de ballast,

les lignes en traits discontinus signifiant des endroits de liaison possibles.

7. Image en couleur selon la revendication 6, caractérisée en ce que dans les formules II et V, $A^1$ représente un accepteur d'électrons comparativement fort et $A^2$ un accepteur d'électrons comparativement plus faible.